# EUROPÄISCHE PATENTSCHRIFT

(11) **EP 2 881 857 B1**
(45) Veröffentlichungstag und Bekanntmachung des Hinweises auf die Patenterteilung: **04.07.2018**
(21) Anmeldenummer: 13005730.0
(22) Anmeldetag: 09.12.2013
(51) Int. Cl.: G06F 9/445

(54) **Verfahren zur Änderung der Software im Speicher eines elektronischen Steuergerätes**
Method for modifying the software in the memory of an electronic control device
Procédé de modification du logiciel dans la mémoire d'un appareil de commande électronique

(43) Veröffentlichungstag der Anmeldung: 10.06.2015
(73) Patentinhaber: dSPACE digital signal processing and control engineering GmbH, 33102 Paderborn (DE)
(72) Erfinder: Dressler, Marc, 32805 Horn-Bad Meinberg (DE); Hufnagel, Torsten, 33154 Salzkotten (DE); Kellers, Bastian, 33100 Paderborn (DE)
(74) Vertreter: Cohausz Hannig Borkowski Wißgott

(56) Entgegenhaltungen:
- US-A1- 2006 242 383
- LEVINE J: "Linkers and Loaders - Loading and Overlays", INTERNET CITATION, 15. Juni 1999 (1999-06-15), XP002368385, Gefunden im Internet: URL:ftp://ftp.iecc.com/pub/linker/linker08 .ps.gz [gefunden am 2006-02-17]
- JANGHOON LYU ET AL: "A procedure-based dynamic software update", PROCEEDINGS INTERNATIONAL CONFERENCE ON DEPENDABLE SYSTEMS AND NETWORKS. DSN 2001. G|TEBORG, SWEDEN, JULY 1 - 4, 2001; [INTERNATIONAL CONFERENCE ON DEPENDABLE SYSTEMS AND NETWORKS], LOS ALAMITOS, CA : IEEE COMP. SOC, US, 1 January 2001 (2001-01-01), pages 271-280, XP031172817, DOI: 10.1109/DSN.2001.941412 ISBN: 978-0-7695-1101-6

## Beschreibung

Die Erfindung betrifft ein Verfahren zur Änderung der Software im Speicher eines elektronischen Steuergerätes, wobei der Speicher zumindest einen Festspeicher umfasst mit darin gespeicherten und zumindest einen Teil der Software bildenden mehreren ursprünglichen Programmroutinen, die durch wenigstens einen Prozessor des Steuergerätes abgearbeitet werden, der Speicher zumindest einen Arbeitsspeicher zur Speicherung flüchtiger Daten aufweist und der Speicher weiterhin einen Overlay-Speicher aufweist, von dem jede Speicheradresse mittels einer Zuordnungsinformation einer Speicheradresse im Festspeicher zugeordnet werden kann, so dass der Prozessor bei einer aktivierten Overlay-Funktionalität statt eines Programmroutinenbefehls an einer Adresse im Festspeicher den Befehl an einer zugeordneten Adresse des Overlay-Speichers abarbeitet, wobei die Overlay-Funktionalität über eine Schnittstelle des Steuergerätes aktivierbar und deaktivierbar ist.

In der Automobilindustrie ermöglicht der Einsatz von Software Kontroll- und Regelungsmechanismen mit einem Grad an Effizienz, wie er durch rein mechanische Lösungen nicht zu verwirklichen wäre. Moderne Autos beinhalten ein Netzwerk aus elektronischen Steuergeräten (ECUs, Electronic Control Units) mit jeweils mindestens einem Prozessor, der Programmroutinen abarbeitet, einem Arbeitsspeicher und einem Festspeicher, letzterer für gewöhnlich verwirklicht durch einen Flash-Speicher.

Alle Steuergeräte verfügen zudem über Schnittstellen, mittels derer sie Sensordaten aufnehmen, Aktoren ansteuern und miteinander kommunizieren. Wie in der Softwareindustrie allgemein üblich, wird auch bei der ECU-Programmierung gerne auf bestehende Lösungen zurückgegriffen. Als Basis für die Entwicklung eines neuen Steuergerätes dient dann ein bereits bestehendes, z.B. ein Motorsteuergerät für einen Motor aus einer Vorgängerserie. Dann werden selektiv einzelne Programmroutinen modifiziert oder neu entwickelt, während der größte Teil des alten Codes erhalten bleibt.

Alternativ geben Hersteller oft bei Zulieferern vollständig programmierte Entwicklungssteuergeräte in Auftrag, um diese dann selbst gemäß den eigenen, spezifischen Anforderungen zu modifizieren. In diesem Szenario müssen die neu entwickelten Programmroutinen in den lauffähigen Binärcode des Steuergerätes eingebunden werden und dort die jeweilige ursprüngliche Programmroutine ersetzen, verändern oder ergänzen. Diesen Einbindungsvorgang bezeichnet man als Bypassing.

Zur Implementierung eines Bypasses existieren verschiedene Möglichkeiten. Eine sehr verbreitete Methode ist das servicebasierte Bypassing. Ein Service ist eine spezielle, im Speicher des Steuergerätes liegende Funktion. An bestimmten Stellen im Programmcode wird er aufgerufen und übernimmt die technische Durchführung des Bypasses, indem er zusätzlich zur oder anstelle der ursprünglichen Programmroutine die Bypass-Routine aufruft, deren Eingangsgrößen zur Verfügung stellt und nach deren Durchlauf dafür sorgt, dass von der Bypass-Routine geschriebene Werte an den richtigen Stellen im Steuergeräte-Speicher abgelegt werden. Andere Verfahren kommen ohne Service-Funktionen aus. Sie basieren auf einer Modifikation des Binärcodes. Beispielsweise ist es möglich, durch Einfügung von Schalterlogiken Variablenzugriffe in einer Funktion unwirksam zu machen.

Grundsätzlich kann der Code einer Bypass-Routine entweder auf einem externen System oder auf dem Steuergerät selbst liegen. Letztere Möglichkeit, das sogenannte interne Bypassing, kommt dabei mit weniger zusätzlicher Hardware aus und ist nicht auf das Vorhandensein spezieller Schnittstellen angewiesen.

Ein Entwicklungssteuergerät muss nach bisherigem Stand der Technik für die Durchführung eines Bypasses vorbereitet werden. Bei Anwendung eines servicebasierten Bypassing-Verfahrens bedeutet das, dass vor und/oder nach (je nach Verfahren) und/oder innerhalb der zu ersetzenden Funktion ein Aufruf der Servicefunktion in den Binärcode einer Programmroutine integriert sein muss. Im Idealfall werden diese Serviceaufrufe schon auf Quellcodeebene implementiert. In der Praxis ist das nicht immer umsetzbar. Beispielsweise könnte der Zulieferer des Steuergerätes dazu nicht bereit sein, oder die Notwendigkeit eines Bypasses einer bestimmten Funktion erschließt sich erst, nachdem das Steuergerät bereits fertiggestellt ist. In einem solchen Fall ist es auch möglich, die Aufrufe nachträglich in den Binärcode zu integrieren.

Das Aufspielen von Code einer Bypass-Routine bedingt nach aktuellem Stand der Technik jeweils ein neues Bespielen des Flash-Speichers des Steuergeräts. Das ist nicht nur zeitaufwendig (einige zehn Sekunden bis zu Minuten) und unterbricht laufende Testreihen, sondern strapaziert auch den Flash-Speicher, der physisch nur eine begrenzte Anzahl an Speichervorgängen verkraften kann.

In einem typischen, dem Stand der Technik entsprechenden Szenario für servicebasiertes internes Bypassing liegt, zusätzlich zum eigentlichen Programmcode, eine spezielle Bypass-Service-Funktion im Flash. Eine beliebige Programmroutine f, die für einen Bypass präpariert ist, ist um zwei Aufrufe des Services erweitert. Der Anwender, der eine Bypass-Routine im Flash installiert, trägt deren Speicheradresse in einer Tabelle ein. Der erste Aufruf der Service-Funktion befindet sich beispielsweise unmittelbar vor f. Die Service-Funktion erhält als Argument eine Tabellenposition. Findet sie dort eine Speicheradresse vor, ruft sie die Bypass-Funktion auf, die sich an dieser Adresse befindet. Ansonsten bleibt sie passiv. Die Bypass-Routine, sofern sie ausgeführt wird, schreibt alle von ihr produzierten Werte in einen Zwischenspeicher aus eigens für sie definierten globalen Variablen. Nach Abarbeitung der Bypass-Routine springt der Prozessor wieder zurück in das eigentliche Programm. Die Funktion f läuft dann ordnungsgemäß durch, unabhängig davon, ob eine Bypass-Routine ausgeführt wurde oder nicht.

Nach Durchlauf von f erfolgt ein zweiter Aufruf der Service-Funktion. Als Argument erhält sie eine zweite Tabellenposition und findet dort die Adresse einer Überschreibungsfunktion. Diese ist auf die Bypass-Routine abgestimmt und wurde mit ihr zusammen installiert. Die Überschreibungsroutine liest den von der Bypass-Routine angelegten Zwischenspeicher aus und überschreibt die von f geschriebenen Variablen.

Die Informationen über die von f verarbeiteten Variablen stammen aus der a2l-Datei des Steuergeräts. Das ist eine technische Beschreibungsdatei, die jedem Entwicklungssteuergerät beiliegt. Sie enthält unter anderem einen Block, der den auf dem Steuergerät laufenden Funktionen ihre jeweils gelesenen und geschriebenen Variablen zuordnet, sowie einen zweiten Block, der die Speicheradressen der Variablen nennt. Die Kenntnis des Quellcodes von f ist für den Entwurf einer Bypass-Routine deshalb nicht notwendig.

Die Druckschrift US 2006/242383 A1 offenbart ein Verfahren zur Änderung von ROM-Code durch Overlay-Routinen. Aufgabe der Erfindung ist es, eine Änderung von Software auf einem Steuergerät vorzunehmen, welches ursprünglich, insbesondere herstellerseitig, nicht dafür präpariert wurde, eine Änderung an der Software zuzulassen, insbesondere also keine präparierten Service-Funktions-Aufrufe innerhalb der Programmroutinen umfassen muss.

Es ist weiterhin eine Aufgabe, den Inhalt des Flash-Speichers dabei weitgehend oder sogar vollständig unangetastet zu lassen, wodurch ein Großteil der beim Bypassing auftretenden, bereits genannten Probleme umgangen wird (physische Belastung des Flash-Speichers, hoher Zeitaufwand für das Bespielen des Steuergerätes, Notwendigkeit der vorherigen Präparation durch Service-Funktionen). Eine weitere Aufgabe ist es, die Möglichkeit zu erschließen, den Code einer Programmroutine dynamisch zur Laufzeit des Steuergerätes ergänzen, verändern oder austauschen zu können, insbesondere ohne dafür das Steuergerät anzuhalten.

Diese Aufgabe wird durch ein Verfahren gemäß des unabhängigen Anspruchs gelöst. Beispiele für Hilfscode sind Sprungbefehle, Servicefunktionen und Aufrufe von Servicefunktionen.

Unter einem Ersetzen einer Programmroutine oder zumindest eines Teils davon wird erfindungsgemäß verstanden, dass die Programmroutine oder ein Teil davon funktional ersetzt wird, also statt dieser Routine oder des Teils eine andere Routine oder ein anderer Teil vom Prozessor abgearbeitet wird. Die erfindungsgemäße Ersetzung ändert gerade erfindungsgemäß nicht den ursprünglichen Code im Festspeicher, sondern lässt diesen unangetastet. Es wird gemäß der Erfindung dafür Sorge getragen, dass statt des ursprünglichen Codes ein anderer Code vom Prozessor ausgeführt wird.

Hierfür macht sich die Erfindung zunutze, dass Steuergeräte, insbesondere Entwicklungssteuergeräte, die nicht für die Serienverbauung in einem Produkt bestimmt sind, sondern für die Entwicklung, den Test und die Kalibrierung der auf dem Gerät implementierten Software, oft über einen sogenannten Overlay-Speicher verfügen. Das ist ein spezieller Speicherbereich, welcher der schnellen und unkomplizierten Überdeckung einzelner Fragmente des Programmcodes dient.

Es kann sich dabei beispielsweise um ein eigenes, in den Prozessor integriertes Speichermodul handeln oder um einen reservierten bzw. reservierbaren Bereich des Arbeits- oder Flash-Speichers. Einzelne Adressen oder ganze Adressbereiche aus dem Overlay-Speicher lassen sich mittels wenigstens einer Zuordnungsinformation, insbesondere die in dafür vorgesehenen Prozessorregistern gespeichert wird, Adressen oder gleich großen Adressbereichen auf dem Flash oder Arbeitsspeicher zuordnen.

Erfindungsgemäß wird mit einem mit dem Steuergerät verbundenen Rechner bzw. einer darauf laufenden Software und/oder einem mit dem Steuergerät verbundenen Beeinflussungsgerät eine Zuordnungsinformation erstellt, die sodann zwecks Aktivierung der Zuordnung und somit zwecks Aktivierung der Overlay-Funktionalität in die dafür vorgesehenen Prozessorregister eingeschrieben wird.

Bei einem Steuergerät dieser Art wird bei jedem Prozessorzugriff auf eine Speicheradresse, insbesondere eine Speicheradresse zumindest des Festspeichers, geprüft, ob dieser Adresse eine Adresse im Overlay-Speicher zugeordnet ist. Ist das der Fall, wird der Inhalt der Speicheradresse ignoriert und stattdessen auf die zugeordnete Speicheradresse im Overlay-Speicher zugegriffen. Steht dort ein ausführbarer Befehl, so wird dieser von dem Prozessor abgearbeitet. Die das Verfahren ausführende Logik ist bevorzugt auf dem Prozessor eines Steuergerätes hart verdrahtet.

Der Overlay-Speicher dient nach Stand der Technik der Kalibrierung des Steuergeräts. Darunter versteht man die Anpassung von Parametern der fertigen und getesteten Steuergerätesoftware an ein bestimmtes Fahrzeugmodell. Bei den in Steuergeräten verwendeten üblichen Flash-Speichern ist es aus physikalischen Gründen nur mit hohem Aufwand möglich, einzelne Werte zu manipulieren, weil dafür erst größere Speicherbereiche des Flash-Speichers komplett gelöscht und dann wieder komplett neu programmiert werden müssen. Solch ein Löschen und ständiges Neubeschreiben des Flashs ist zeitlich meistens nicht vertretbar. Es ist auch bei laufender Programmabarbeitung in der Regel gar nicht möglich, da ein komplett gelöschter oder erst zum Teil neu programmierter Flash-Speicherbereich zu unvorhergesehenen Reaktionen führen kann, wenn der Prozessor in diesem Bereich seinen Programmcode bearbeitet oder dort abgelegte Daten verarbeitet. Die Parameter werden deshalb in den Overlay-Speicher geschrieben, sodass sie die auf dem Flash gespeicherten Variablen überdecken, und können dort schnell und zur Laufzeit manipuliert werden. Gemäß Stand der Technik wird demnach der Overlay-Speicher nur zur Überschreibung von Variablen oder Parametern genutzt.

Das erfindungsgemäße Verfahren sieht nun vor, durch Nutzung des Overlay-Speicher eine neue Funktionalität einzuführen, nämlich den Overlay-Speicher zur Einfügung von Code einer Bypass-Routine in ein Steuergeräteprogramm zu nutzen und durch den Code eine Programmroutine zumindest teilweise funktional zu ersetzen oder zu ergänzen.

Eine Bypass-Routine wird demnach ganz oder zumindest teilweise in den Overlay-Speicher geschrieben, und die für die Overlay-Funktionalität genutzten Register des Prozessors durch Speichern wenigstens einer Zuordnungsinformation so konfiguriert, dass statt der zu ersetzenden ursprünglichen Programmroutine die Bypass-Routine ausgeführt wird. Eine spezielle Ausführung sieht vor, im Overlay-Speicher einen Sprungbefehl zu speichern, der den Prozessor zu einer Speicheradresse außerhalb des aktiven Overlay-Speichers führt, ab der zumindest ein Teil der Bypass-Routine gespeichert ist. Dies kann prinzipiell eine beliebige Adresse innerhalb oder außerhalb des Overlay-Speichers sein. Die Erfindung kann also auch mit Steuergeräten genutzt werden, die nur einen sehr kleinen Overlay-Speicher zur Verfügung stellen.

Unter dem "aktiven Overlay-Speicher" wird erfindungsgemäß die Gesamtheit aller Speicheradressen verstanden, denen anhand einer Zuordnungsinformation jeweils eine andere Speicheradresse eineindeutig zugeordnet ist, so dass sie bei aktivierter Overlay-Funktionalität diese jeweils andere Speicheradresse wie zuvor erläutert überdecken.

Eine Präparation des Steuergerätes durch den Zulieferer ist, anders als beim aus dem Stand der Technik bekannten servicebasierten Bypassing, durch Einsatz der Erfindung nicht mehr nötig. Außerdem ist es möglich, Code einer Bypass-Routine schnell und ohne Anhalten des Steuergerätes nachzuladen oder auszutauschen.

Hierzu kann es vorgesehen sein, dass die Overlay-Funktion, sofern sie aktiviert ist, zunächst deaktiviert wird, sodass das Steuergerät unter Ausführung der ursprünglichen Programmroutinen weiterläuft. Erfolgen kann dies z.B. durch Löschen der Prozessorregister bzw. der darin stehenden Zuordnungsinformation.

Währenddessen kann der Code einer Bypass-Routine im Overlay-Speicher oder ein Sprungbefehl im Overlay-Speicher nach Belieben manipuliert und, wenn das abgeschlossen ist, die Overlay-Funktionalität wieder aktiviert werden. Dabei ist sicherzustellen, dass der Prozessor bei der Aktivierung des Overlay-Speichers keine Befehle in dem durch den Overlay-Speicher überdeckten Speicherbereich ausführt, sofern der im Overlay-Speicher abgelegte, überdeckende Code vom ursprünglichen Code abweicht.

Umgekehrt darf sich zum Zeitpunkt einer Deaktivierung der Programmfluss nicht innerhalb eines Teils der Bypass-Routine befinden, der vom überdeckten ursprünglichen Code abweicht. Andernfalls käme es zu einer Inkonsistenz des Programmablaufs mit unvorhersehbaren Folgen bis hin zur Zerstörung des Testfahrzeugs, Simulators oder Prüfstands.

Ein solches Szenario wird z.B. verhindert, indem die (De-) Aktivierung des Overlay-Speichers an eine Speicheradresse außerhalb des betroffenen Bereichs gekoppelt wird.

Der Anwender kann eine Umschaltung zwischen beiden Funktionen dann nicht direkt veranlassen, sondern er teilt, bevorzugt mittels einer auf einem angeschlossenen Rechner laufenden Software, seinen Wunsch nach einer Aktivierung oder Deaktivierung mit, und das verwendete Bypass-Werkzeug, beispielsweise ein über eine Schnittstelle mit dem Steuergerät verbundenes Beeinflussungsgerät, führt diese Aktivierung / Deaktivierung aus, sobald der Prozessor eine festgelegte, als sicher erkannte Speicheradresse, also eine Adresse außerhalb des betroffenen Bereichs, erreicht.

Möglich ist das zum Beispiel durch Überwachung des Programm-Counters, über den sich die Speicheradresse des aktuell bearbeiteten Maschinenbefehls auslesen lässt. Daneben gibt es eine Vielzahl anderer Möglichkeiten, wie die Verwendung eines Variablenzugriffs als Trigger, von dem bekannt ist, dass er an einer sicheren Speicheradresse erfolgt, oder die Überwachung eines I/O-Pins.

Eine bevorzugte, besonders sichere Möglichkeit ist die Verwendung einer speziellen, in den Programmcode integrierten Service-Funktion, die auf ein Signal hin die Umschaltung zwischen ursprünglicher Funktion und Bypass-Code verursacht.

Es kann auch vorgesehen sein, dass mittels der Overlay-Funktionalität nicht nur eine Bypass-Routine einer ursprünglichen Programmroutine überdeckt wird, sondern dass auch die De-/Aktivierung dieser Überdeckung durch Nutzung der Overlay-Funktionalität erfolgt, z.B. dadurch, dass ein Befehl in einer Programmroutine außerhalb der zu ersetzenden Programmroutine durch einen Sprungbefehl im Overlay-Speicher überdeckt wird, wobei der Sprungbefehl zu einer Adresse verweist, ab der ein Programmcode programmiert ist, welcher den überdeckten Befehl rekonstruiert, wobei der Programmcode weiterhin die De-/Aktivierung der Overlay-Funktionalität für die zu ersetzende Programmroutine vornimmt, und welcher mit einem Sprungbefehl endet, der auf denjenigen Befehl in der Programmroutine außerhalb der zu ersetzenden Programmroutine verweist, welcher auf den überdeckten Befehl folgt, insbesondere wobei die De-/Aktivierung durch Aufruf einer Unterprogrammroutine innerhalb dieses Programmcodes erfolgt.

Es wird so immer sichergestellt, dass eine De-/Aktivierung erfolgt, wenn der Prozessor Programmcode außerhalb der zu ersetzenden Programmroutine abarbeitet. Der Programmcode, der die De-/Aktivierung übernimmt, kann z.B. die dafür benötigte Zuordnungsinformation, die von der eingangs genannten Software oder dem Beeinflussungsgerät erstellt wurde, in die dafür vorgesehenen Register des Prozessors schreiben.

Bei der erfindungsgemäßen Lösung, die vorsieht, im aktiven Overlay-Speicher lediglich einen Sprungbefehl zu speichern, kann es auch vorgesehen sein, dass eine Aktivierung derart gesichert erfolgt, dass vor dem Speichern des Sprungbefehls im Overlay-Speicher, der auf eine Speicheradresse außerhalb des Overlay-Speichers verweist, ab welcher die Bypass-Routine gespeichert wird, im Overlay-Speicher eine Rekonstruktion der gesamten zu ersetzenden Programmroutine oder des gesamten zu ersetzenden Programmroutinenteils gespeichert wird und eine Overlay-Funktionalität für eine Überdeckung der gesamten zu ersetzenden Programmroutine oder des gesamten zu ersetzenden Programmroutinenteils durch diese Rekonstruktion aktiviert wird.

Hierdurch wird bewirkt, dass durch die Aktivierung zunächst keinerlei Funktionalitätsänderung erfolgt, es wird nämlich durch den Prozessor nach der Aktivierung exakt derselbe Programmcode abgearbeitet wie vor der Aktivierung. Wird nun an einer Adresse des aktiven Overlay-Speichers der genannte Sprungbefehl abgespeichert, so wird bewirkt, dass beim nächsten Programmroutinendurchlauf der Prozessor mit seiner Abarbeitung umgeleitet wird auf die Bypass-Routine außerhalb des Overlay-Speichers. Die faktische Umschaltung auf die Bypass-Routine erfolgt hier also nicht durch die Aktivierung der Overlay-Funktionalität, sondern durch Speichern des Sprungbefehls an der ersten Adresse im zugeordneten Overlay-Speicherbereich, was bevorzugt wiederum durch die Software erfolgt, die auf dem Rechner läuft, der über die genannte Schnittstelle mit dem Steuergerät verbunden ist.

Unter Beachtung einer sicheren De-/Aktivierung der Overlay-Funktionalität für die zumindest teilweise zu ersetzende Programmroutine kann die Erfindung mehrere Ausführungen der Speicherung der Bypass-Routine vorsehen.

Beispielsweise kann es vorgesehen sein, dass bei einer Bypass-Routine mit geringerer Programmcode-Länge als die zu ersetzende Programmroutine oder als der zu ersetzende Programmroutinenteil der gesamte Adressbereich im Festspeicher, welcher durch die zu ersetzende Programmroutine oder den zu ersetzenden Programmroutinenteil belegt ist, im Overlay-Speicher durch einen gleich langen Adressbereich überdeckt wird, in welchem die ersetzende Bypass-Routine zumindest teilweise, bevorzugt in diesem Fall komplett gespeichert wird. Im bevorzugten Fall wird dann nur Overlay-Speicher für die Bypass-Routine in Anspruch genommen.

Bei einer Bypass-Routine mit größerer Programmcode-Länge als die zu ersetzende Programmroutine, als der zu ersetzende Programmroutinenteil oder als der verfügbare Overlay-Speicher kann der gesamte Adressbereich im Festspeicher, welcher durch die zu ersetzende Programmroutine oder den zu ersetzenden Programmroutinenteil belegt ist, im Overlay-Speicher durch einen gleich langen Adressbereich überdecktt werden, in welchem zumindest ein erster Teil der Bypass-Routine gespeichert wird, welcher mit einem Sprungbefehl endet, welcher den Prozessor veranlasst mit der Programmabarbeitung an einer durch den Sprung-Befehl identifizierten Adresse fortzufahren, ab der wenigstens ein weiterer Teil der Bypass-Routine gespeichert ist. Dieser wenigstens eine weitere Bypass-Routinenteil kann dann beispielsweise auch außerhalb des Overlay-Speichers abgespeichert werden, z.B. im Arbeitsspeicher.

Diese Ausführungen können weiterhin vorsehen, dass bei einer Ersetzung einer gesamten Programmroutine durch eine Bypass-Routine diese Bypass-Routine mit einem Sprungbefehl, insbesondere mit einem Rücksprungbefehl endet, welcher den Prozessor veranlasst, mit der Programmabarbeitung zu derjenigen Programmroutine zurückzukehren, welche die zu ersetzende Programmroutine aufgerufen hat, insbesondere als Unterprogrammroutine aufgerufen hat. So ist es nämlich üblich, dass bei einem Unterprogrammaufruf im Sinne eines "Gosub"-Befehls automatisch durch den Prozessor ein Programm-Counter-Stand gespeichert wird, der dem Adressort dieses Befehls entspricht und durch einen "Return"-Befehl als Rücksprungbefehl der Prozessor zum nächsten auf diesem Ort folgenden Befehl zurückkehrt.

Wird hingegen nur ein Teil einer Programmroutine ersetzt, so kann die Bypass-Routine auch mit einem Sprungbefehl enden, der den Prozessor veranlasst, die Programmabarbeitung bei demjenigen Befehl der ursprünglichen Programmroutine fortzuführen, der auf den zu ersetzenden Teil folgt. Hier umfasst der Sprungbefehl üblicherweise ein Argument, welches eine absolute oder relative Adressangabe darstellt, d.h. genau die Adresse zu der der Prozessor für die weitere Programmabarbeitung springen soll.

Eine Ausführung kann auch vorsehen, dass die gesamte Bypass-Routine in einen Speicherbereich außerhalb des aktiven Overlay-Speichers gespeichert ist und dass ein Befehl an einer Adresse der zu ersetzenden Programmroutine im Overlay-Speicher überdeckt wird mit einem Sprungbefehl, der den Prozessor veranlasst mit der Abarbeitung an der Adresse fortzufahren, die durch den Sprungbefehl identifiziert ist und ab der die Bypass-Routine gespeichert ist, welche mit einem Rücksprung-Befehl endet, welcher den Prozessor veranlasst zu derjenigen Programmroutine zurückzukehren, welche die zu ersetzende Programmroutine aufgerufen hat, insbesondere als Unterprogrammroutine aufgerufen hat, wie es zuvor bereits beschrieben wurde.

Ausführungsbeispiele werden nachfolgend anhand der Figuren beschrieben.
**Fig. 1** skizziert einen technischen Aufbau eines Bypass-Szenarios.
**Fig. 2** zeigt ein Entwicklungssteuergerät vor Anwendung des erfindungsgemäßen Verfahrens.
**Fig. 3** zeigt ein Entwicklungssteuergerät nach Anwendung des erfindungsgemäßen Verfahrens, wobei die Bypass-Funktion kleiner ist als die ursprüngliche Funktion.
**Fig. 4** zeigt ein Entwicklungssteuergerät nach Anwendung des erfindungsgemäßen Verfahrens, wobei die Bypass-Funktion größer ist als die ursprüngliche Funktion.
**Fig. 5** zeigt eine Umsetzung des erfindungsgemäßen Verfahrens, die mit geringen Overlay-Speicher-Ressourcen auskommt.
**Fig. 6** zeigt eine Umsetzung des erfindungsgemäßen Verfahrens, wobei der Bypass-Code keine vollständige Funktion darstellt.
**Fig. 7** zeigt die beispielhafte Integration einer Service-Funktion in den Steuergerätecode unter Anwendung des erfindungsgemäßen Verfahrens.
**Fig. 8** zeigt eine ergänzende Integration eines Funktionsaufrufs in den Steuergerätecode unter Anwendung des erfindungsgemäßen Verfahrens.

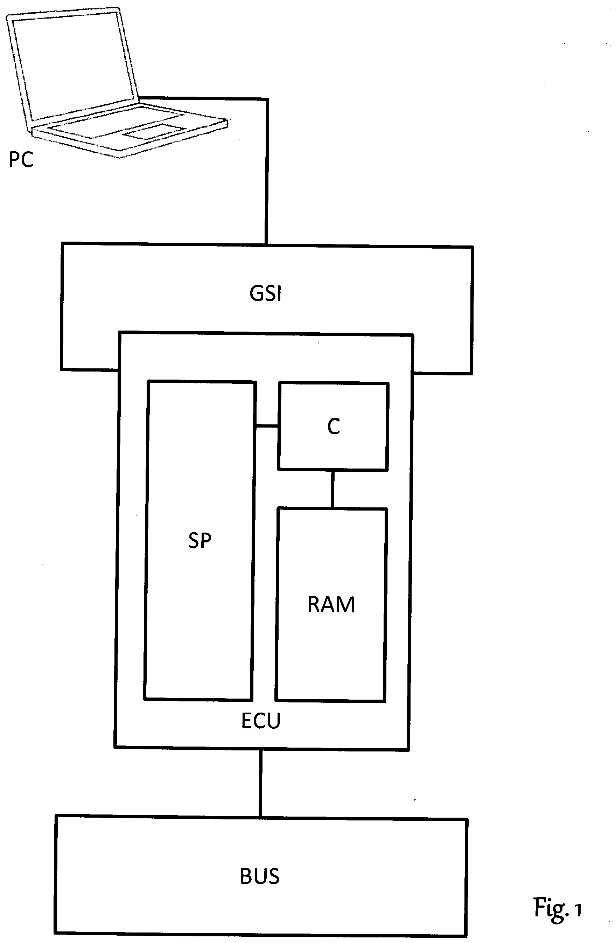

**Fig. 1** skizziert ein typisches Bypassing-Szenario nach Stand der Technik. Getestet wird ein elektronisches Steuergerät **ECU.** Dieses verfügt mindestens über einen Festspeicher **SP,** für gewöhnlich ein Flash-Speicher, einen flüchtigen Arbeitsspeicher **RAM** sowie einen Prozessor **C,** der über eine Datenleitung auf beide Speicher zugreifen kann. Auf dem Festspeicher **SP** liegt ein in Maschinensprache kodiertes Computerprogramm, das die Funktionalität des Steuergerätes bestimmt. Ist das Steuergerät zum Beispiel zum Einbau in einem Automobil bestimmt, kann es sich um ein Programm zur Regelung eines Motors handeln. Das Steuergerät verfügt außerdem über Schnittstellen. Über diese ist es in der Lage, Daten von Sensoren oder anderen Steuergeräten entgegenzunehmen und diese mittels des auf dem Festspeicher **SP** gespeicherten, durch den Prozessor **C** ausgeführten Computerprogramms auszuwerten, sowie von diesem Programm produzierte Daten an andere Steuergeräte und Aktoren weiterzugeben.

Bevorzugt handelt es sich bei **ECU** um ein Entwicklungssteuergerät, das nicht zur Serienverbauung im fertigen Produkt bestimmt ist. Dementsprechend verfügt es über eine Anzahl weiterer Schnittstellen, die Softwareentwicklern und Testern über die genannten Grundfunktionen hinaus Zugriff auf das Steuergerät ermöglichen. Darunter fallen beispielsweise Schnittstellen für einen direkten Zugriff auf Festspeicher **SP** und Arbeitsspeicher **RAM,** zur Konfiguration des Prozessors **C,** zur Auslesung des Programm-Counters, der die aktuell vom Prozessor **C** bearbeitete Speicheradresse ausgibt, oder zum Setzen und Konfigurieren von Breakpoints und Watchpoints.

In typischen Szenarien ist das Steuergerät **ECU** über eine Schnittstelle an einen Bus **BUS** angeschlossen. Beim Bus **BUS** kann es sich um ein Netzwerk von weiteren Steuergeräten handeln, wenn das Steuergerät **ECU** zum Beispiel in einem Testfahrzeug verbaut ist. Es kann sich beim Bus **BUS** aber auch um ein Netzwerk virtueller Steuergeräte handeln, das auf einem Hardware-in-the-Loop-Simulator (HIL) simuliert wird. Die Kommunikation mit dem Bus kann über unterschiedliche Bussysteme geschehen. Meistens handelt es sich um den in der Automobilindustrie etablierten CAN-Bus. Aber auch andere Standards sind möglich, wie LIN, Ethernet oder FlexRay.

Das Steuergerät **ECU** ist zudem mit einem Beeinflussungsgerät **GSI** verbunden. Das Beeinflussungsgerät **GSI,** zum Beispiel ein dSPACE DCI-GSI1, ist eine Hardware-Schnittstelle, die einem Anwender Zugriff auf die genannten Entwicklungsschnittstellen gewährt. Über das Beeinflussungsgerät **GSI** ist das Steuergerät **ECU** mit einem Rechner **PC** verbunden. Auf diesem läuft Software, die zur Implementierung von Bypass-Code und zur Konfiguration des Steuergerätes **ECU** ausgestattet ist und z.B. dem Anwender eine entsprechende graphische Benutzeroberfläche zur Verfügung stellt.

Das Beeinflussungsgerät **GSI** dient der Ansteuerung und Überwachung des Steuergerätes **ECU,** insbesondere der Konfiguration der Prozessorregister und der Auslesung des Programm-Counters. Der angeschlossene Rechner **PC** verfügt über keinen direkten Zugriff auf das Steuergerät **ECU.** Vom Anwender initiierte Änderungswünsche wie die Aktivierung oder Deaktivierung der Overlay-Funktionalität teilt der Rechner dem Beeinflussungsgerät **GSI** mit, das dann die entsprechende Neukonfiguration des Steuergerätes **ECU** selbständig vornimmt.

Der in **Fig. 1** gezeigte Aufbau ist beispielhaft und für das erfindungsgemäße Verfahren nicht einschränkend. So kann zum Beispiel die Funktionalität des Beeinflussungsgeräts **GSI** in Form von Servicefunktionen teilweise oder vollständig an den Prozessor C des Steuergerätes delegiert werden. Insbesondere kann, wenn das Steuergerät **ECU** über mehr als einen Prozessor verfügt (Multicore), ein erster Prozessor alle Programmroutinen bearbeiten, die Teil der herstellerseitig vorgesehenen Funktionalität des Steuergerätes sind, während ein zweiter Prozessor parallel die nachträglich installierten, zur Bypass-Umgebung gehörigen Servicefunktionen bearbeitet, ohne dabei den ersten Prozessor auszubremsen.

Auch der angeschlossene Rechner **PC** ist je nach Anwendungsfall möglicherweise verzichtbar, sobald alle Bypass-Routinen geladen und das Steuergerät **ECU** erfindungsgemäß präpariert wurde. Sind beispielsweise das Beeinflussungsgerät **GSI** bzw. eine zuständige Servicefunktion derart ausgestaltet, dass der Wunsch nach einer Aktivierung oder Deaktivierung der Overlay-Funktionalität anhand des Spannungszustandes eines I/O-Pins des Steuergerätes oder des Beeinflussungsgeräts **GSI** mitgeteilt wird, dann kann eine Umschaltung zwischen ursprünglichem Code und Bypass-Routine auch anhand eines angeschlossenen elektrischen Schalters erfolgen.

Unter der "Bypass-Umgebung" wird erfindungsgemäß die Gesamtheit der Komponenten aus **Fig. 1** bezeichnet, die über die Grundfunktionalität des Steuergerätes **ECU** (Ausführung von Steuergerätecode, Kommunikation mit dem Bus **BUS**) hinausgeht, also das Beeinflussungsgerät **GSI,** der Rechner **PC,** die Konfigurations- und Bypass-Software sowie die Schnittstellen, über die die genannte Software mit dem Steuergerät kommuniziert.

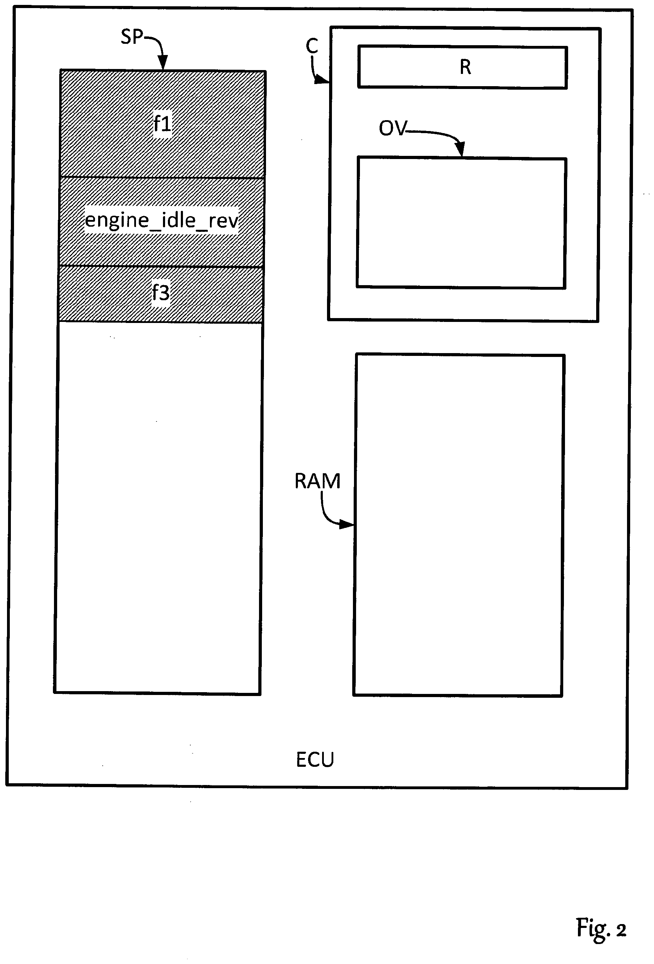

**Fig. 2** zeigt schematisch ein Entwicklungssteuergerät **ECU** mit einem Prozessor **C,** einem Festspeicher **SP,** für gewöhnlich ein Flash-Speicher, und einem Arbeitsspeicher **RAM.** In den Prozessor **C** integriert sind ein Overlay-Speicher **OV** und ein Satz von Registern **R.** Der Prozessor **C** beinhaltet eine Anordnung von Logikgattern, derart ausgestaltet, dass sich mittels der Register **R** Speicheradressbereiche im Festspeicher **SP** und Arbeitsspeicher **RAM** definieren lassen, deren Inhalte vom Prozessor **C** bei der Abarbeitung des Programms ignoriert und durch Inhalte aus dem Overlay-Speicher **OV** ersetzt werden.

Bei jedem Speicherzugriff prüft der Prozessor, ob die Adresse des aktuell ausgelesenen Maschinenbefehls in einem durch die Register **R** erfassten Speicherbereich liegt. Ist das der Fall, wird der dort abgelegte Inhalt ignoriert und stattdessen der auf der zugeordneten Adresse des Overlay-Speichers **OV** liegende Inhalt gelesen und ausgeführt. Auf diese Weise lassen sich einzelne Inhalte/Befehle oder auch längere Sequenzen vorübergehend deaktivieren und durch andere Inhalte/Befehlssequenzen ersetzen, ohne die ursprünglichen Sequenzen im Festspeicher **SP** überschreiben zu müssen.

Die in der Figur gezeigte Konfiguration ist beispielhaft und nicht einschränkend für die Erfindung. Andere Ausgestaltungen sind möglich. Zum Beispiel könnte der Overlay-Speicher **OV** auch ein zu diesem Zweck reservierter Adressbereich des Arbeitsspeichers **RAM** oder anderer adressierbarer Speicherbereiche des Prozessors **C** sein. Auch können sowohl Arbeitsspeicher **RAM** als auch Festspeicher **SP** in den Prozessor **C** integriert sein. Auch welche Speicherbereiche genau durch den Overlay-Speicher **OV** überdeckt werden können, kann je nach Steuergerät bzw. verwendetem Prozessor variieren. Bei einem Gerät sind es vielleicht alle durch den Prozessor adressierbaren Speicherbereiche, inklusive Festspeicher, RAM und externer Speichermedien, bei einem anderen nur Teile des adressierbaren Speichers.

Auf dem Festspeicher **SP** liegt ein in Maschinensprache codiertes Programm, komponiert aus drei Programmfunktionen *f1, engine_idle_rev* und *f3*. (Die Anzahl drei dient der zeichnerischen Darstellbarkeit. Ein reales Steuergeräteprogramm besteht für gewöhnlich aus einigen hundert Funktionen.)

In einem realistischen Beispielszenario ist das Steuergerät **ECU** ein Motorsteuergerät und die Funktion *engine_idle_rev* eine Funktion zur Regulierung der Leerlaufdrehzahl. Zur Reduzierung des Treibstoffverbrauchs ist es sinnvoll, die Leerlaufdrehzahl des Motors möglichst niedrig zu halten, d.h. dicht an der Drehzahl, die gerade noch ausreicht, den Betrieb des Motors aufrecht zu erhalten. Dieser Wert ist aber keine für jedes Motormodell festgelegte Konstante, sondern ein variabler, von vielen veränderlichen Faktoren bestimmter Wert. Dazu gehören neben dem Motormodell zum Beispiel der Ladestand der Batterie, die momentane Batterielast durch elektrische Verbraucher oder die Motortemperatur. Entsprechend den vielen, schwer quantifizierbaren Einflussfaktoren besteht ein großes Optimierungspotential. Kein Programmierer einer Funktion zur Regelung der Leerlaufdrehzahl kann die Existenz einer besseren Lösung mit Sicherheit ausschließen. In einem Szenario könnte ein Automobilhersteller, der von einem Zulieferer ein fertig programmiertes Entwicklungs-Motorsteuergerät erhalten hat, den Wunsch haben, die auf diesem Steuergerät implementierte Funktion zur Regelung der Leerlaufdrehzahl testweise durch eine andere zu ersetzen.

In einem anderen Szenario möchte er vielleicht die Funktionalität des Steuergeräts erweitern. Beispielsweise könnte er sein Automodell mit einer Abschaltautomatik bei Stillstand des Autos ausstatten wollen. Da die auf dem Steuergerät vorhandene Funktion zur Regelung der Leerlaufdrehzahl eine solche Funktionalität nicht aufweist, möchte er sie durch eine eigene ersetzen und zu diesem Zweck mehrere Varianten seiner eigenen Funktion ausprobieren.

Der Quellcode liegt dem Anwender im Allgemeinen nicht vor. Gemäß dem Stand der Technik müsste er den Hex-Code vom Speicher **SP** auslesen, mit Bypass-Services versehen, den Bypass-Code hinzufügen und den Flash neu bespielen. Das Ersetzen der Bypass-Funktion durch eine dritte Variante der Funktion würde wiederum ein neues Bespielen des Flashs bedingen usw. Der Zeitaufwand dafür ist hoch.

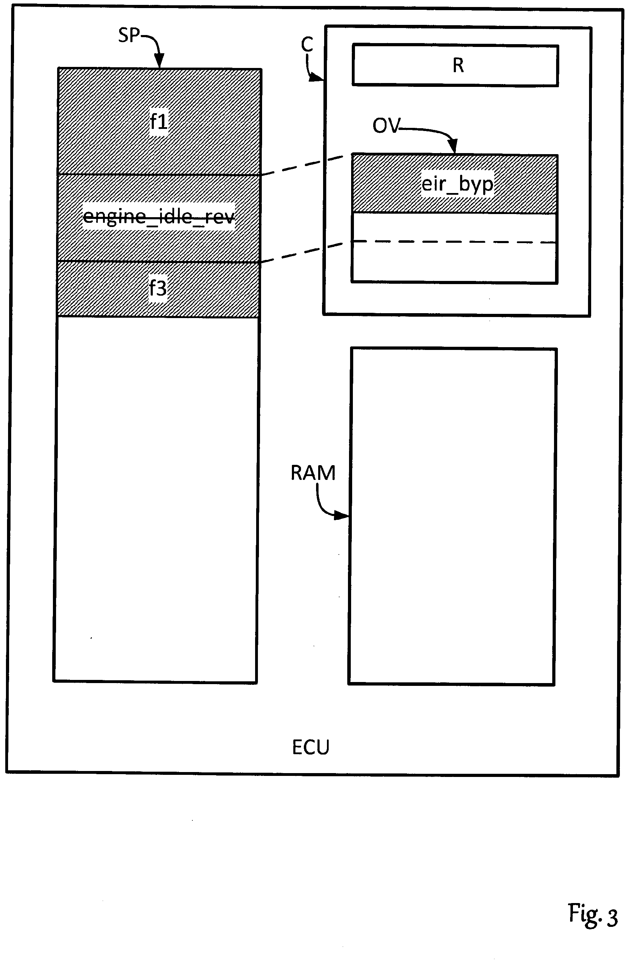

Das erfindungsgemäße Verfahren erlaubt es, die Funktion *erigine_idle_rev* ohne spezielle Präparation des Steuergeräts **ECU** und ohne Modifikation des auf dem Flash **SP** gespeicherten Codes durch eine andere Funktion zu ersetzen. **Fig.** 3 zeigt das Steuergerät nach Anwendung des Verfahrens. Die Register **R** sind derart konfiguriert, dass ein Adressbereich des Overlay-Speichers **OV** die zu ersetzende Funktion *engine_idle_rev* überdeckt. In diesem Adressbereich befindet sich eine vom Anwender gespeicherte Bypass-Funktion *eir_byp*, die vom Prozessor nun anstelle der ursprünglichen Funktion aufgerufen wird.

Bei aktivierter Overlay-Funktion ist jeweils einer Adresse im Festspeicher (oder im Arbeitsspeicher) eine Adresse im Overlay-Speicher zugeordnet. Überdeckter Speicher und zugewiesener Overlay-Speicher sind deshalb immer gleich groß. Sofern der Bypass-Code in den zugewiesenen Overlay-Speicher passt und aus einer vollständigen Funktion besteht, ergeben sich daraus keine Probleme. Die Bypass-Funktion schließt mit einem *return*-Befehl, der den Prozessor in die aufrufende Mutterfunktion zurückweist, und das Programm wird ordnungsgemäß fortgesetzt. Ist die Bypass-Funktion hingegen größer als die ursprüngliche Funktion, kann sie nicht vollständig in den Overlay-Speicher integriert werden.

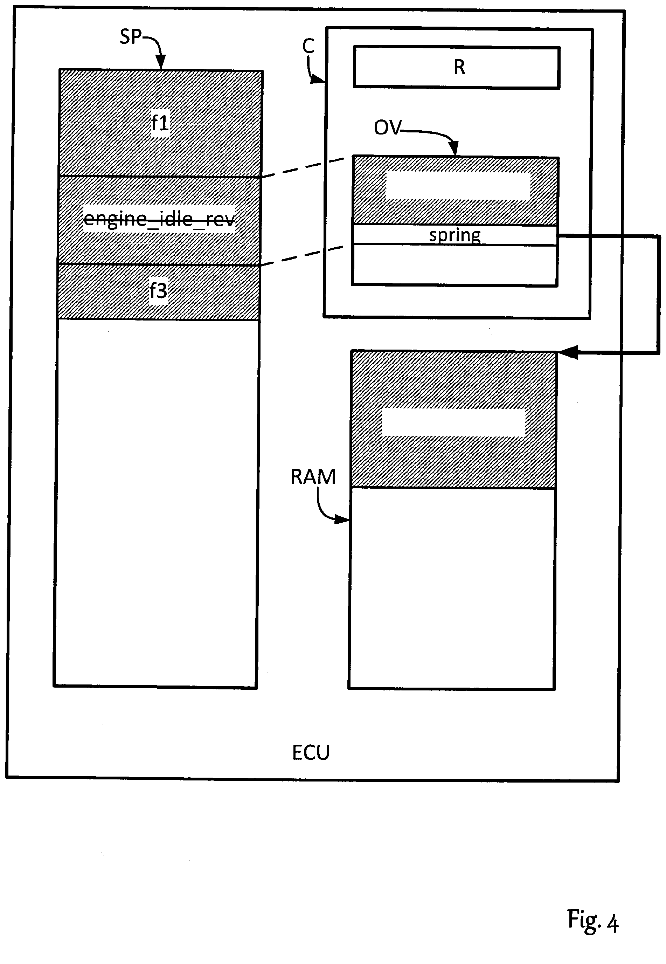

Eine mögliche Vorgehensweise in diesem Fall zeigt **Fig. 4****.** Der zugewiesene Overlay-Speicher ist in diesem Fall zu klein, die Bypass-Funktion vollständig aufzunehmen.

Wenigstens ein Teil von ihr wird deshalb in den Arbeitsspeicher ausgelagert. Sprungbefehle sorgen für einen konsistenten Programmablauf. Es ist auch möglich, den funktionalen Bypass-Code vollständig in einen nicht als Overlay-Speicher vorgesehenen Speicherbereich auszulagern, beispielsweise in den Arbeitsspeicher **RAM,** und in den aktiven Overlay-Speicher ausschließlich einen Sprungbefehl zu schreiben, der auf den funktionalen Bypass-Code verweist.

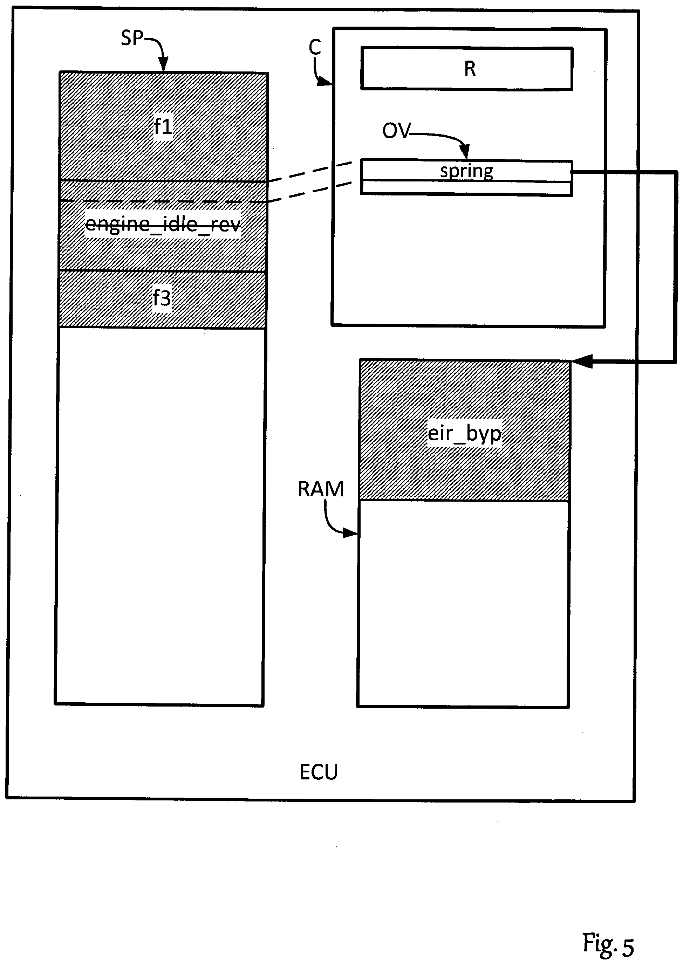

Bei einigen Entwicklungssteuergeräten ist der Overlay-Speicher vielleicht nur für die Überdeckung einer kleinen Anzahl einzelner Befehle konzipiert und für die Speicherung längerer Code-Sequenzen zu klein. Oder eine Aufteilung der Funktion *eir_byp* ist technisch, beispielsweise aufgrund von Einschränkungen der für die Übersetzung der Funktion verwendeten Compiler, nicht möglich. Die Vorgehensweise für diese Fälle zeigt **Fig. 5****.** Nicht die vollständige ursprügnliche Funktion wird überdeckt, sondern nur eine kurze Sequenz, bevorzugt an deren Anfang oder an einer anderen geeigneten Stelle. Der zugewiesene Speicherbereich im Overlay-Speicher enthält nur einen Sprungbefehl auf die in den Arbeitsspeicher **RAM** ausgelagerte Bypass-Funktion.

In der Praxis ist die Zuteilung des Overlay-Speichers nicht immer so frei wählbar, wie es in den aufgezeigten Beispielen implizit vorausgesetzt wurde. Viele Entwicklungssteuergeräte unterliegen hier Beschränkungen, beispielsweise derart, dass die Byte-Größe eines zusammenhängenden Overlay-Speicherbereichs eine Potenz von zwei darstellen muss oder der zuteilbare Speicherbereich in unteilbare Intervalle von mehreren Bytes unterteilt ist. In der Anwendung des erfindungsgemäßen Verfahrens bedeutet das, dass der zugewiesene Overlay-Speicher im Allgemeinen wahlweise größer oder kleiner sein muss als eigentlich erwünscht. Für die Anwendbarkeit der Erfindung ist dieser Umstand nicht einschränkend. Bei zu kleinem zugeteiltem Overlay-Speicher kann die in **Fig. 4** oder **Fig. 5** gezeigte Methode angewandt werden. Bei zu großem zugeteiltem Overlay-Speicher werden alle Speicheradressen des zugeteilten Overlay-Speichers, die eine Speicheradresse außerhalb des erfindungsgemäß für eine Überdeckung vorgesehenen Speicherbereichs überdecken, jeweils mit einer exakten Kopie des Inhalts der überdeckten Speicheradresse aufgefüllt, sodass es keinen Unterschied macht, ob der Prozessor **C** an dieser Stelle den ursprünglichen Code oder den im zugewiesenen Overlay-Speicher abgelegten Code ausführt, weil beide identisch sind. Im Sinne der Erfindung ist es unbedeutend, ob der Overlay-Speicher von vornherein passend zugeteilt wird oder ob ein Teil des Overlay-Speichers zunächst unerwünscht zugeteilt und dann auf die beschriebene Weise effektiv wieder deaktiviert wird.

In allen bislang betrachteten Beispielen wurde davon ausgegangen, dass der Bypass-Code aus einer vollständigen Funktion besteht. Da Steuergerätecode aus Softwarekomponenten aufgebaut ist, wird das in der Praxis auch meistens der Fall sein. Softwarekomponenten sind bereits kompilierte Funktionen oder Bündel weniger Funktionen mit dokumentierter Funktionalität und dokumentierten Schnittstellen, die, häufig nach dem Prinzip der graphischen Programmierung (z.B. mit dSPACE SystemDesk), zu Programmen zusammengefügt werden. Sofern die Schnittstellen und die wesentliche Funktionalität einer Komponente bekannt sind -- eine entsprechende Dokumentation liegt jeder Komponente bei -- ist es nicht nötig, den Code der Komponente zu kennen. Diese Arbeitsweise ist in der Steuergeräteprogrammierung etabliert. Deshalb ist im Allgemeinen davon auszugehen, dass auch der Bypass-Code aus Komponenten, also mindestens einer vollständigen Funktion besteht. Prinzipiell spricht aber nichts dagegen, mittels der in dieser Anmeldung beschriebenen Methode keine ganze Funktion bzw. Softwarekomponente, sondern nur eine kürzere Code-Sequenz mit einem Bypass zu versehen.

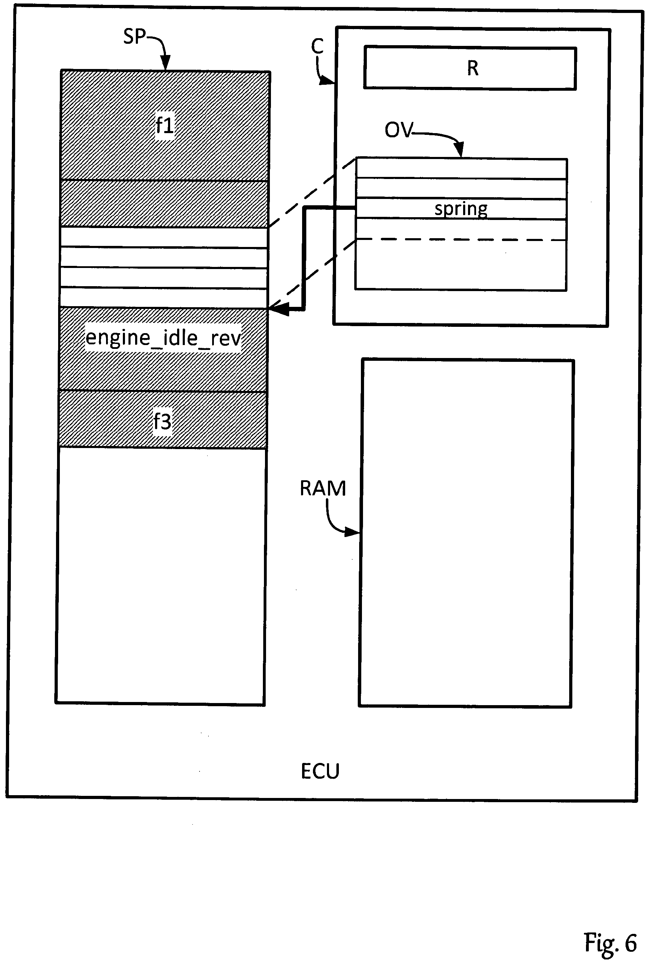

**Fig. 6** zeigt die Durchführung eines solchen Bypasses. Die Register **R** sind derart konfiguriert, dass der Overlay-Speicher **OV** eine Sequenz von Maschinenbefehlen innerhalb der Funktion *engine_idle_rev* überdeckt, beispielsweise, um eine Teilfunktionalität der Funktion *engine_idle_rev,* wie die Berechnung eines bestimmten Wertes oder das Schreiben dedizierter Variablen, zu ersetzen. Da dementsprechend auch der Bypass-Code keine vollständige Funktion beschreibt, fehlt der abschließende *return*-Befehl. Der Bypass-Code muss deshalb um eine abschließende Sprunganweisung ergänzt werden, die den Prozessor **C** wieder in den regulären Programmablauf zurückführt. In der Figur ist der Bypass-Code kleiner als der überdeckte ursprüngliche Code. Weil aber der reservierte Overlay-Speicher immer genauso so groß ist wie der überdeckte Speicher, bleibt ein Teil des reservierten Overlay-Speichers unbeschrieben. Ohne die Sprunganweisung käme es zu einem undefinierten Verhalten, sobald der Prozessor **C** die erste unbeschriebene Adresse erreicht.

Alternativ ist es möglich, den reservierten, aber ungenutzten Overlay-Speicher mit Leerbefehlen (NOPs = *No OPeration*) oder anderen für den Funktionsablauf unkritischen Befehlen aufzufüllen. Da deren Abarbeitung aber im Allgemeinen länger dauert als die Ausführung des ursprünglichen Codes (Programmcode enthält *if-*Anweisungen, wird also selektiv ausgeführt), ist das in **Fig.** 5 gezeigte Verfahren mit der Sprunganweisung im Allgemeinen bevorzugt.

Ist die Bypass-Code-Sequenz größer als die ursprüngliche Codesequenz, wird wie in **Fig. 4** gezeigt ein Teil des Codes in den Arbeitsspeicher **RAM** oder einen anderen verfügbaren Speicher ausgelagert. Auch in diesem Fall muss aber der Bypass-Code um eine abschließende Sprunganweisung erweitert werden.

Bei allen vorgestellten Verfahren ist sicherzustellen, dass zum Zeitpunkt einer Aktivierung bzw. Deaktivierung des Overlay-Speichers kein Code ausgeführt wird, der von der Überdeckung durch den Overlay-Speicher betroffen ist und sich vom überdeckten bzw. überdeckenden Code unterscheidet. Für das in **Fig. 3** skizzierte Beispiel bedeutet das, dass der Overlay-Speicher nur aktiviert werden darf, wenn gerade kein Code aus der Funktion *engine_idle_rev* ausgeführt wird. Umgekehrt darf seine Deaktivierung nur erlaubt sein, wenn kein Code aus *eir_byp* ausgeführt wird.

Andernfalls würde der Prozessor mitten in der Abarbeitung des Funktionscodes von einer Funktion zur anderen springen, effektiv also eine neue, mit hoher Wahrscheinlichkeit sinnlose Funktion ausführen, die sich zu jeweils einem Anteil aus Code von beiden Funktionen zusammensetzt. Oder er würde, wenn er den durch *eir_byp* überdeckten Speicherbereich bereits verlassen hat, in den unbeschriebenen Bereich des reservierten Overlay-Speichers springen. Es wäre sogar möglich, dass der Wechsel mitten in einem Befehl stattfindet und sich Befehlsanteile aus ursprünglichem und Bypass-Code zu einem neuen, ebenfalls mit hoher Wahrscheinlichkeit sinnlosen Befehl zusammensetzen. Die Folge wäre in fast jedem Fall eine unkalkulierbare Fehlfunktion des Steuergerätes mit möglicherweise schwerwiegenden Folgen.

Die Bypass-Umgebung ist zu diesem Zweck derart ausgestaltet, dass der Anwender der Bypass-Umgebung den Wunsch nach einer Aktivierung bzw. Deaktivierung einer Bypass-Routine mitteilt.

Ausgeführt wird sie zu einem Zeitpunkt, zu dem der Prozessor eine als sicher erkannte Speicheradresse bearbeitet. Dies kann beispielsweise durch Überwachung des Programm-Counters, der die vom Prozessor aktuell bearbeitete Speicheradresse wiedergibt, und der Auswertung weiterer Informationseinheiten, wie z.B. dedizierte Register oder Call Stacks, die die Rücksprungadressen von mittels Interrupt unterbrochenen Programmroutinen beinhalten, sichergestellt werden. Diese Informationen können beispielsweise über eine Debug-Schnittstelle (beispielsweise eine JTAG-Debug-Schnittstelle) aktiv gelesen werden oder über eine Programm-Trace-Schnittstelle, über die der Prozessor die Speicheradresse des aktuell ausgeführten Befehls ausgibt, passiv überwacht werden.

Eine weitere Möglichkeit, neben der Auslesung des Programm-Counters, ist die Kopplung der (De-) Aktivierung des Overlay-Speichers an ein Trigger-Ereignis, von dem bekannt ist, dass es ausschließlich an als sicher erkannten Speicheradressen auftritt. Das könnte zum Beispiel ein Zugriff auf eine bestimmte Variable oder die Ansteuerung eines bestimmten I/O-Pins sein. Die Dauer einer Neukonfiguration der Register zur (De-) Aktivierung des Overlay-Speichers ist wesentlich kleiner als ein typischer Programmzyklus eines Steuergerätes. Eine Umschaltung zwischen Bypass-Code und ursprünglichem Code ist deshalb ohne Anhalten des Steuergerätes möglich. Der Prozessor muss dafür aber gerade eine Adresse bearbeiten, die einen hinreichenden zeitlichen Abstand zu der durch den Overlay betroffenen Funktion garantiert.

Von Beginn der Aktivierung bzw. Deaktivierung der Overlay-Funktionalität bis zum nächsten Aufruf der Funktion muss also ein so großer Zeitraum verstreichen, dass die Aktivierung bzw. Deaktivierung durch Neukonfiguration der Register **R** bis dahin mit Sicherheit abgeschlossen ist. Das Verfahren bedarf deshalb einer vorhergehenden Analyse des Binärcodes, um alle Aufrufe der betroffenen Funktion zu finden und die Speicheradressen zu identifizieren, die eine sichere Aktivierung bzw. Deaktivierung der Overlay-Funktionalität erlauben. Alternativ kann das Steuergerät bis zum Abschluss der Umschaltung angehalten werden, sobald der Prozessor Code bearbeitet, der von der (De-)Aktivierung des Overlay-Speichers nicht betroffen ist. Das Anhalten eines Prozessors ist aber im Allgemeinen unerwünscht, weil dafür meist auch das Gesamtsystem (Simulator, Prüfstand oder Testfahrzeug) angehalten werden muss. Zum Beispiel darf ein Motorsteuergerät in der Regel nicht angehalten werden, während der Motor noch läuft.

Eine besonders sichere und daher bevorzugte Methode ist die Aktivierung oder Deaktivierung der Overlay-Funktionalität durch eine Service-Funktion, die bevorzugt ihrerseits durch Ausnutzung des Overlay-Speichers in den Programmcode integriert wird, ohne dabei den ursprünglichen Code abzuändern.

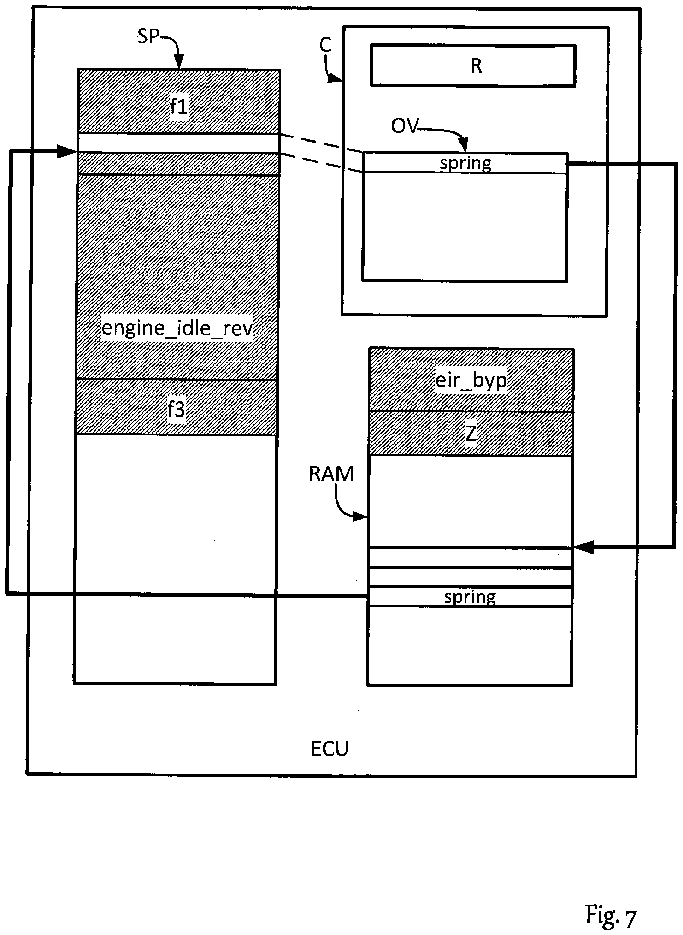

Wie eine solche Service-Einbindung funktioniert, zeigt **Fig. 7****.** Im Arbeitsspeicher **RAM** oder einem anderen verfügbaren Speicher befindet sich zusätzlich zu der eigentlichen Bypass-Funktion *eir_byp* noch eine Service-Funktion **Z,** die sich unter Ausnutzung des Overlay-Speichers **OV** an einer beliebigen Stelle des Programmcodes, insbesondere außerhalb der durch Überdeckung zu ersetzenden Routine einbinden lässt. Die Figur zeigt eine Einbindung in die Funktion *f1*. Eine kurze Code-Sequenz wird mittels Überdeckung durch eine Sprunganweisung ersetzt, die auf eine Adresse im Arbeitsspeicher **RAM** zeigt. Dort wird zunächst der überdeckte Code rekonstruiert und um einen Aufruf des Services **Z** ergänzt. Es folgt eine weitere Sprunganweisung, die den Prozessor **C** wieder in den regulären Programmablauf zurückführt. Die Service-Funktion enthält einen Befehl zur Umkonfiguration der Prozessorregister **R,** die an eine Bedingung geknüpft ist, zum Beispiel an eine über eine Schnittstelle beschreibbare Kontrollvariable oder den Signalpegel eines Eingangs-Pins des Steuergerätes **ECU.** In dieser Ausführung der Erfindung braucht der Anwender sich nicht darum zu kümmern, zu welchem Zeitpunkt die Register **R** umkonfiguriert werden. Dies geschieht mit Sicherheit innerhalb der eingebundenen, nicht zum eigentlichen Programmcode gehörenden Service-Funktion. Im Umkehrschluss wird zu diesem Zeitpunkt mit Sicherheit keine zum Programm gehörende Funktion und keine Bypass-Funktion ausgeführt. Um eine Unterbrechung der Service-Funktion oder der für die Umkonfiguration der Overlay-Bereiche kritischen Sequenzen der Service-Funktion durch Interrupt-Bearbeitung im Prozessor zu verhindern, kann der Service-Code dafür sorgen, dass solch eine Unterbrechung in diesen kritischen Sequenzen nicht erfolgen kann.

Die Aktivierung der Overlay-Funktionalität zur Einbindung der Service-Funktion **Z** erfolgt vor Beginn der Abarbeitung des zu verändernden Programmcodes durch den Prozessor **C** mittels dafür vorgesehener Schnittstellen des Steuergerätes **ECU,** beispielsweise unmittelbar nach Einschaltung des Steuergerätes **ECU** oder während der Initialisierungsphase des Steuergeräteprogramms. In einer anderen Ausführung kann die in **Fig. 7** gezeigte Service-Funktion **Z** auch eine klassische Service-Funktion sein, die eine bevorzugt im Arbeitsspeicher **RAM** abgelegte Bypass-Funktion aufruft. Die Bypass-Funktion würde in einer Ausführung ihre Werte zunächst in einen Zwischenspeicher schreiben. Die ursprüngliche Funktion liefe danach ganz normal durch, und nach ihrem Durchlauf würde mit einem zweiten Service-Aufruf eine Überschreibungsfunktion aufgerufen, die die von der ursprünglichen Funktion geschriebenen Werte mit den Werten aus dem Zwischenspeicher überschreibt.

Verfügt das Steuergerät **ECU** über mehr als nur einen Prozessorkern , kann es vorteilhaft sein, dass die ursprüngliche Funktion *engine_idle_rev* und die Bypass-Funktion *eir_byp* auf zwei Prozessorkernen parallel gerechnet werden. Das heißt, ein erster Prozessorkern arbeitet das auf dem Flash-Speicher **SP** gespeicherte Steuergeräteprogramm inklusive der ursprünglichen Funktion *engine_idle_rev* ab, während ein zweiter Prozessorkern parallel die Bypass-Funktion *eir_byp* abarbeitet, nachdem diese aufgerufen wurde. Auf diese Weise lassen sich durch die Einbindung einer zusätzlichen Funktion auftretende Laufzeitverlängerungen, die die Echtzeitfähigkeit des Steuergerätes **ECU** beinträchtigen können, minimieren. Insbesondere bei zeitkritischen Aufgaben wie der Steuerung eines Motors wird diese Ausgestaltung als vorteilhaft angesehen.

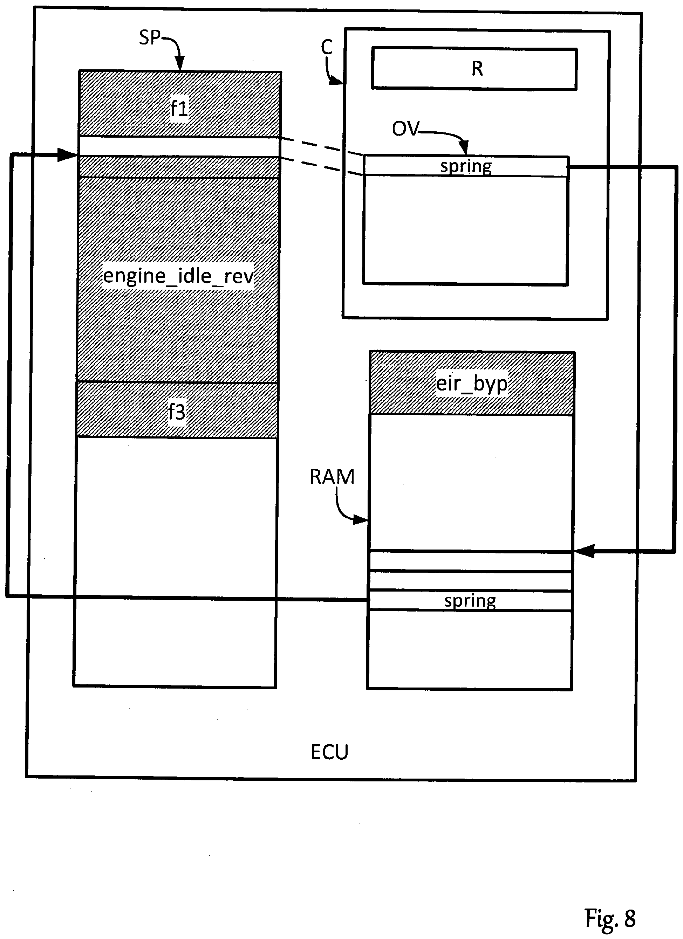

**Fig. 8** zeigt ein weiteres bevorzugtes Ausführungsbeispiel des erfindungsgemäßen Verfahrens. Nach der in **Fig. 7** vorgestellten Methode wird der aus der Funktion *f1* erfolgende Aufruf der ursprünglichen Programmfunktion *engine_idle_rev* um einen Aufruf der Bypass-Funktion *eir_byp* ergänzt. Auf diese Weise werden beide Funktionen, zuerst die ursprüngliche Funktion und danach die Bypass-Funktion, durch den Prozessor **C** abgearbeitet, wobei für die weitere Abarbeitung des Steuergeräteprogramms nur die Ausgabewerte einer der beiden Funktionen verwendet werden. Auf diese Weise ist es möglich, beide Funktionen, die ursprünglich auf dem Steuergerät **ECU** installierte Funktion *engine_idle_rev* und die zu deren Ersetzung vorgesehene Bypass-Funktion *eir_byp*, direkt miteinander zu vergleichen oder die Ausgabewerte von *engine_idle_rev* der Bypass-Funktion *eir_byp* zur Verarbeitung oder Validierung zur Verfügung zu stellen. Es kann Teil des Funktionsumfangs von *eir_byp* sein, zu entscheiden, ob die eigenen Ausgabewerte oder die Ausgabewerte der ursprünglichen Programmfunktion im weiteren Verlauf der Programmabarbeitung verwendet werden. Beispielsweise kann *eir_byp*, abhängig vom Wert eines durch den Anwender manipulierbaren Parameters, ihre eigenen Ausgabewerte zur späteren Analyse speichern, ohne sie den folgenden Programmroutinen zur Verfügung zu stellen, oder die von *engine_idle_rev* geschriebenen Ausgabewerte überschreiben. Es kann auch Teil des Funktionsumfangs von *eir_byp* sein, die von *engine_idle_rev* geschriebenen Ausgabewerte zur späteren Analyse zu speichern.

Eine Variante der Erfindung kann auch vorsehen, dass in den Overlay-Speicher **OV** zunächst eine Eins-zu-Eins-Kopie der ursprünglichen Funktion geschrieben wird. Der erste Befehl der im Overlay-Speicher gespeicherten Funktion wird dann durch ein *return* ersetzt und der Overlay-Speicher anschließend aktiviert. Dies deaktiviert die zu ersetzende Funktion. Sobald sichergestellt ist, dass kein Programmcode im Overlay-Speicher ausgeführt wird, beispielsweise durch Überwachung des Programm-Counters oder auch einfach durch kurzes Abwarten, wird die im Overlay-Speicher gespeicherte Funktion durch Bypass-Code ersetzt, wobei erst ganz zuletzt der *return*-Befehl überschrieben wird. Diese Variante ist nur durchführbar, wenn die zu ersetzende Funktion einfach deaktiviert werden kann, ohne die Funktion des Steuergerätes gefährlich zu beinträchtigen. Häufig ist das der Fall.

Eine andere Variante kann vorsehen, dass in den Overlay-Speicher **OV** eine Eins-zu-Eins-Kopie der ursprünglichen Funktion geschrieben wird. Die Bypass-Funktion wird zunächst in einen verfügbaren, nicht als Overlay-Speicher vorgesehenen Speicherbereich geschrieben, bevorzugt im Arbeitsspeicher **RAM.** In einem zweiten Schritt wird der erste Befehl des Codes im Overlay-Speicher mit einer Sprunganweisung auf die Bypass-Funktion überschrieben. Es kann jetzt ohne weitere Sicherungsmaßnahmen zwischen ursprünglichem und Bypass-Code umgeschaltet werden, da beide Codes bis auf die Sprunganweisung identisch sind.

Diese Variante ist nur dann sicher durchführbar, wenn Sprunganweisungen als atomare Befehle formulierbar sind und sich an der zu überdeckenden Position im ursprünglichen Programmcode ebenfalls ein atomarer Befehl befindet, sodass ein Umschalten "mitten im Befehl" nicht möglich ist. Häufig ist das der Fall.

In einer Ausführung der Erfindung kann es vorgesehen sein, einen Overlay-Speicher durch eine Umprogrammierung einer Memory Management Unit (MMU), über die viele Entwicklungssteuergeräte verfügen, auszubilden. Mittels der MMU lassen sich logischen Speicheradressen physikalische Speicheradressen zuordnen. Erfindungsgemäß ist es also möglich, einen freien physikalischen Speicherbereich mit Bypass-Code zu beschreiben und dann die MMU derart umzuprogrammieren, dass die dem zu ersetzenden Code zugeordneten logischen Speicheradressen nach der Umprogrammierung der MMU auf den Bypass-Code zeigen.

Mit der MMU lassen sich also Speicherbereiche überdecken, insbesondere wie mit den Overlay-Einheiten, nämlich dadurch, dass zwei unterschiedliche Zuordnungen logischer Speicheradressen verwendet werden, sodass ein und derselbe Satz logischer Speicheradressen entweder auf den zu ersetzenden Code oder auf den Bypass-Code zeigt.

Alle in diesem Text geschilderten Verfahren gelten unabhängig davon, ob ein Overlay-Speicher nativ vorhanden ist oder durch eine Programmierung einer MMU gebildet wird. Sofern eine MMU mit hinreichender Funktionalität zur Verfügung steht, spielt es für die Erfindung keine Rolle, ob ein Register mit Overlay-Funktion des Prozessors oder eine MMU mit einer Zuordnungsinformation beschrieben wird, um die Overlay-Funktionalität zu aktivieren. Unter einer hinreichenden Funktionalität ist insbesondere zu verstehen, dass die Konfiguration der MMU im laufenden Betrieb des Steuergeräts änderbar ist.

## Patentansprüche

1. Verfahren zur Änderung der Software im Speicher eines elektronischen Steuergerätes, wobei der Speicher zumindest einen Festspeicher umfasst mit darin gespeicherten und zumindest einen Teil der Software bildenden mehreren ursprünglichen Programmroutinen, die durch wenigstens einen Prozessor des Steuergerätes abgearbeitet werden, der Speicher zumindest einen Arbeitsspeicher zur Speicherung flüchtiger Daten aufweist und der Speicher weiterhin einen Overlay-Speicher aufweist, wobei jede Speicheradresse aus dem Overlay-Speicher mittels einer Zuordnungsinformation einer Speicheradresse im Festspeicher zugeordnet werden kann, so dass der Prozessor bei einer aktivierten Overlay-Funktionalität statt eines Programmroutinenbefehls an einer Adresse im Festspeicher den Befehl an einer zugeordneten Adresse des Overlay-Speichers abarbeitet, wobei die Overlay-Funktionalität über eine Schnittstelle des Steuergerätes aktivierbar und deaktivierbar ist, wobei während der Laufzeit des Steuergerätes in einem Adressbereich im Overlay-Speicher zumindest ein funktionaler Teil einer Bypass-Routine gespeichert wird, mit der eine ursprüngliche Programmroutine zumindest teilweise ersetzt werden soll oder im Overlay-Speicher als erster Teil einer Bypass-Routine ein Sprungbefehl gespeichert wird, der direkt oder indirekt auf einen zweiten Teil der Bypass-Routine verweist, der in einem dem Prozessor zugänglichen Adressbereich gespeichert wird, und eine Zuordnungsinformation erstellt wird, welche die Adresse und/oder den Adressbereich des Overlay-Speichers einer Adresse oder einem Adressbereich der zu ersetzenden Programmroutine oder des zu ersetzenden Teils der Programmroutine zuordnet, **dadurch gekennzeichnet, dass** Code einer Bypass-Routine ohne Anhalten des Steuergerätes ausgetauscht wird dadurch, dass zunächst eine aktivierte Overlay-Funktion deaktiviert wird und das Steuergerät unter Ausführung der ursprünglichen Programmroutinen weiterläuft, wobei sich zum Zeitpunkt der Deaktivierung der Programmfluß außerhalb der Bypass-Routine befindet und während der Ausführung der ursprünglichen Programmroutinen der Code einer Bypass-Routine im Overlay-Speicher manipuliert wird und nach Abschluß der Manipulation die Overlay-Funktionalität wieder aktiviert wird, wenn der Prozessor Programmcode außerhalb der zu ersetzenden Programmroutine abarbeitet.

2. Verfahren nach Anspruch 1, **dadurch gekennzeichnet, dass** der gesamte Adressbereich im Festspeicher, welcher durch die zu ersetzende Programmroutine oder den zu ersetzenden Programmroutinenteil belegt ist, durch den Overlay-Speicher mit einem gleich langen Adressbereich überdeckt wird, in welchem die ersetzende Bypass-Routine zumindest teilweise gespeichert ist.

3. Verfahren nach Anspruch 1, **dadurch gekennzeichnet, dass** bei einer Bypass-Routine mit größerer Programmcode-Länge als die zu ersetzende Programmroutine oder als der zu ersetzende Programmroutinenteil der gesamte Adressbereich im Festspeicher, welcher durch die zu ersetzende Programmroutine oder den zu ersetzenden Programmroutinenteil belegt ist, im Overlay-Speicher durch einen gleich langen Adressbereich überdeckt wird, in welchem ein erster Teil der Bypass-Routine gespeichert wird, welcher mit einem Sprung-Befehl endet, welcher den Prozessor veranlasst mit der Programmabarbeitung an einer durch den Sprung-Befehl identifizierten Adresse fortzufahren, ab der wenigstens ein weiterer Teil der Bypass-Routine gespeichert ist.

4. Verfahren nach Anspruch 2 oder 3, **dadurch gekennzeichnet, dass** bei einer Ersetzung einer gesamten Programmroutine die Bypass-Routine mit einem Rücksprung-Befehl endet, welcher den Prozessor veranlasst mit der Programmabarbeitung zu derjenigen Programmroutine zurückzukehren, welche die zu ersetzende Programmroutine aufgerufen hat, insbesondere als Unterprogrammroutine aufgerufen hat, oder bei einer Ersetzung nur eines Teils einer Programmroutine die Bypass-Routine mit einem Sprungbefehl endet, der den Prozessor veranlasst die Programmabarbeitung bei demjenigen Befehl der ursprünglichen Programmroutine fortzuführen, der auf den zu ersetzenden Teil folgt.

5. Verfahren nach Anspruch 1, **dadurch gekennzeichnet, dass** der gesamte funktionale Code einer Bypass-Routine in einen Speicherbereich außerhalb des aktiven Overlay-Speichers gespeichert wird und ein Befehl oder ein Datum an einer Adresse der zu ersetzenden Programmroutine mittels des Overlay-Speichers überdeckt wird mit einem Sprungbefehl, der den Prozessor veranlasst, mit der Abarbeitung an der Adresse fortzufahren, die durch den Sprungbefehl identifiziert ist und ab der der funktionale Code der Bypass-Routine gespeichert ist, welcher mit einem Rücksprungbefehl endet, welcher den Prozessor veranlasst, zu derjenigen Programmroutine zurückzukehren, welche die zu ersetzende Programmroutine aufgerufen hat, insbesondere als Unterprogrammroutine aufgerufen hat.

6. Verfahren nach Anspruch 1, **dadurch gekennzeichnet, dass** der funktionale Code der Bypass-Routine in einen Speicherbereich außerhalb des aktiven Overlay-Speichers gespeichert wird und ein Befehl an einer Adresse der zu ersetzenden Programmroutine im Overlay-Speicher überdeckt wird mit einem Sprungbefehl, der den Prozessor veranlasst, mit der Abarbeitung an einer Adresse fortzufahren, die durch den Sprungbefehl identifiziert ist, wobei der Sprungbefehl zu einer Adresse verweist, ab der ein Programmcode weiterhin den Aufruf des funktionalen Codes der Bypass-Routine vornimmt, insbesondere wobei der Aufruf des funktionalen Codes der Bypass-Routine innerhalb einer innerhalb dieses Programmcodes aufgerufenen Unterprogrammroutine erfolgt.

7. Verfahren nach Anspruch 1, **dadurch gekennzeichnet, dass** durch eine die Aktivierung vornehmende Logik, insbesondere die auf dem über die Schnittstelle angeschlossenen Beeinflussungsgerät abläuft, die Programmbearbeitungsposition des Prozessors des Steuergerätes, bspw. anhand des Programm-Counters, überwacht wird und die Aktivierung zu einem Zeitpunkt erfolgt, zu dem die Programmbearbeitungsposition auf eine Adresse außerhalb der zu ersetzenden Programmroutine weist.

8. Verfahren nach Anspruch 1, **dadurch gekennzeichnet, dass** durch eine die Aktivierung vornehmende Logik, insbesondere die auf dem über die Schnittstelle angeschlossenen Beeinflussungsgerät abläuft, ein Trigger / Interrupt überwacht wird, der durch Programmcode gesetzt wird, welcher außerhalb der zu ersetzenden Programmroutine angeordnet ist und die Aktivierung erfolgt, wenn eine Änderung des Triggers/Interrupts ermittelt wird.

9. Verfahren nach Anspruch 8, **dadurch gekennzeichnet, dass** der Trigger durch einen Variablenzugriff oder eine Zustandsänderung eines I/O-Pins ausgebildet ist.

10. Verfahren nach Anspruch 1, **dadurch gekennzeichnet, dass** die Aktivierung von einer von einem Prozessor des Steuergeräts aufgerufenen Unterprogrammroutine durchgeführt wird.

11. Verfahren nach Anspruch 1, **dadurch gekennzeichnet, dass** ein Befehl in einer Programmroutine außerhalb der zu ersetzenden Programmroutine durch einen Sprungbefehl im Overlay-Speicher überdeckt wird, wobei der Sprungbefehl zu einer Adresse verweist, ab der ein Programmcode programmiert ist, welcher den überdeckten Befehl rekonstruiert, welcher weiterhin die Aktivierung oder Deaktivierung der Overlay-Funktionalität für die zu ersetzende Programmroutine vornimmt und welcher mit einem Sprungbefehl endet, der auf denjenigen Befehl in der Programmroutine außerhalb der zu ersetzenden Programmroutine verweist, welcher auf den überdeckten Befehl folgt, insbesondere wobei die Aktivierung durch Aufruf einer Unterprogrammroutine innerhalb dieses Programmcodes erfolgt.

12. Verfahren nach Anspruch 1, **dadurch gekennzeichnet, dass** der im aktiven Overlay-Speicher abgelegte Code zu einem Teil den in den jeweils zugeordneten Speicheradressen des Festspeichers abgelegten Code exakt rekonstruiert.

13. Verfahren nach Anspruch 1, **dadurch gekennzeichnet, dass** die Erstellung der Zuordnungsinformation und die Aktivierung der Overlay-Funktionalität mittels eines an eine Schnittstelle des Steuergerätes angeschlossenen Beeinflussungsgeräts oder eines an eine Schnittstelle des Steuergeräts angeschlossenen Rechners geschieht.

14. Verfahren nach Anspruch 1, **dadurch gekennzeichnet, dass** die Erstellung der Zuordnungsinformation und/oder Aktivierung der Overlay-Funktionalität mittels einer durch einen Prozessor des Steuergeräts ausgeführten Programmroutine geschieht.

15. Verfahren nach Anspruch 14, **dadurch gekennzeichnet, dass** das Steuergerät mindestens zwei Prozessorkerne aufweist, wobei die Programmroutine zur Erstellung der Zuordnungsinformation und/oder Aktivierung der Overlay-Funktionalität von einem ersten Prozessorkern abgearbeitet wird und die ursprünglichen Programmroutinen von einem zweiten Prozessorkern oder von mehreren weiteren Prozessorkernen abgearbeitet werden

16. Verfahren nach Anspruch 1, **dadurch gekennzeichnet, dass** die Bypass-Routine mindestens eine vollständige, mit einem Rücksprungbefehl abschließende Funktion beinhaltet.

17. Verfahren nach Anspruch 1, **dadurch gekennzeichnet, dass** die Bypass-Routine bzw. ein Teil einer Bypass-Routine, über eine Schnittstelle des Steuergerätes, insbesondere während der Laufzeit des Steuergerätes, in einem durch den Prozessor adressierbaren Speicherbereich gespeichert wird.

18. Verfahren nach Anspruch 1, **dadurch gekennzeichnet, dass** zumindest ein Befehl in einer Programmroutine durch einen Sprungbefehl im Overlay-Speicher überdeckt wird, wobei der Sprungbefehl zu einer Adresse verweist, ab der ein Programmcode programmiert ist, welcher den überdeckten Befehl rekonstruiert, welcher weiterhin eine funktionale Bypass-Routine aufruft und welcher mit einem Sprungbefehl endet, der auf denjenigen Befehl in der Programmroutine verweist, welcher auf den überdeckten Befehl folgt.

19. Verfahren nach Anspruch 18, **dadurch gekennzeichnet, dass** das Steuergerät mindestens zwei Prozessorkerne aufweist und wenigstens der funktionale Code der Bypass-Routine von einem oder mehreren ersten Prozessorkernen abgearbeitet wird und die ursprünglichen Programmroutinen von einem oder mehreren zweiten Prozessorkernen abgearbeitet werden.

20. Verfahren nach einem der vorherigen Ansprüche, **dadurch gekennzeichnet, dass** ein Overlay-Speicher auf einem Steuergerät gebildet wird durch Programmierung einer Memory Management Unit des Steuergerätes, derart, dass die bei deaktivierter Overlay-Funktionalität der zu ersetzenden Programmroutine bzw. dem zu ersetzenden Programmroutinenteil zugeordneten logischen Speicheradressen bei aktivierter Overlay-Funktionalität physikalischen Speicheradressen zugeordnet sind, die in ihrer Gesamtheit zumindest einen Teil der Bypass-Routine beinhalten.

## Claims

1. Method for modifying the software in the memory of an electronic control device, wherein the memory comprises at least one read-only memory with a plurality of original program routines which are stored therein, form at least one part of the software and are executed by at least one processor of the control device, the memory has at least one main memory for storing volatile data, and the memory also has an overlay memory, wherein each memory address from the overlay memory can be assigned to a memory address in the read-only memory by means of an item of assignment information, with the result that, when an overlay functionality is activated, the processor executes the instruction at an assigned address of the overlay memory instead of a program routine instruction at an address in the read-only memory, wherein the overlay functionality can be activated and deactivated via an interface of the control device, wherein, during the run time of the control device, at least one functional part of a bypass routine, with which an original program routine is intended to be at least partially replaced, is stored in an address area in the overlay memory, or the overlay memory stores, as a first part of a bypass routine, a jump instruction which refers directly or indirectly to a second part of the bypass routine stored in an address area accessible to the processor, and an item of assignment information is created and assigns the address and/or the address area of the overlay memory to an address or an address area of the program routine to be replaced or of the part of the program routine to be replaced, **characterized in that** code of a bypass routine is exchanged without stopping the control device by virtue of the fact that an activated overlay function is first of all deactivated and the control device continues to run while executing the original program routines, wherein the program flow is outside the bypass routine at the deactivation time and the code of a bypass routine is manipulated in the overlay memory during the execution of the original program routines and the overlay functionality is activated again after conclusion of the manipulation if the processor executes program code outside the program routine to be replaced.

2. Method according to Claim 1, **characterized in that** the entire address area in the read-only memory which is occupied by the program routine to be replaced or the program routine part to be replaced is overlaid by the overlay memory with an address area of equal length in which the replacing bypass routine is at least partially stored.

3. Method according to Claim 1, **characterized in that,** in the case of a bypass routine having a greater program code length than the program routine to be replaced or than the program routine part to be replaced, the entire address area in the read-only memory which is occupied by the program routine to be replaced or the program routine part to be replaced is overlaid in the overlay memory by an address area of equal length which stores a first part of the bypass routine which ends with a jump instruction which causes the processor to continue with the program execution at an address which is identified by the jump instruction and after which at least a further part of the bypass routine is stored.

4. Method according to Claim 2 or 3, **characterized in that,** when replacing an entire program routine, the bypass routine ends with a return instruction which causes the processor to return with the program execution to that program routine which called the program routine to be replaced, in particular called it as a subprogram routine, or, when replacing only part of a program routine, the bypass routine ends with a jump instruction which causes the processor to continue the program execution at that instruction in the original program routine which follows the part to be replaced.

5. Method according to Claim 1, **characterized in that** the entire functional code of a bypass routine is stored in a memory area outside the active overlay memory, and an instruction or a data item at an address of the program routine to be replaced is overlaid by means of the overlay memory with a jump instruction which causes the processor to continue with the execution at the address which is identified by the jump instruction and after which the functional code of the bypass routine is stored, which functional code ends with a return instruction which causes the processor to return to that program routine which called the program routine to be replaced, in particular called it as a subprogram routine.

6. Method according to Claim 1, **characterized in that** the functional code of the bypass routine is stored in a memory area outside the active overlay memory, and an instruction at an address of the program routine to be replaced is overlaid in the overlay memory with a jump instruction which causes the processor to continue with the execution at an address which is identified by the jump instruction, wherein the jump instruction refers to an address after which a program code still calls the functional code of the bypass routine, in particular wherein the functional code of the bypass routine is called within a subprogram routine called within this program code.

7. Method according to Claim 1, **characterized in that** the program processing position of the processor of the control device is monitored, for example on the basis of the program counter, by a logic unit which carries out the activation and runs, in particular, on the influencing device connected via the interface, and the activation is carried out at a time at which the program processing position points to an address outside the program routine to be replaced.

8. Method according to Claim 1, **characterized in that** a trigger/interrupt which is set by program code arranged outside the program routine to be replaced is monitored by a logic unit which carries out the activation and runs, in particular, on the influencing device connected via the interface, and the activation is carried out if a change in the trigger/interrupt is determined.

9. Method according to Claim 8, **characterized in that** the trigger is formed by accessing a variable or a state change of an I/O pin.

10. Method according to Claim 1, **characterized in that** the activation is carried out by a subprogram routine called by a processor of the control device.

11. Method according to Claim 1, **characterized in that** an instruction in a program routine outside the program routine to be replaced is overlaid by a jump instruction in the overlay memory, wherein the jump instruction refers to an address after which a program code is programmed, which program code reconstructs the overlaid instruction, still activates or deactivates the overlay functionality for the program routine to be replaced and ends with a jump instruction which refers to that instruction in the program routine outside the program routine to be replaced which follows the overlaid instruction, in particular wherein the activation is carried out by calling a subprogram routine inside this program code.

12. Method according to Claim 1, **characterized in that** the code stored in the active overlay memory partially exactly reconstructs the code stored in the respectively assigned memory addresses of the read-only memory.

13. Method according to Claim 1, **characterized in that** the assignment information is created and the overlay functionality is activated by means of an influencing device connected to an interface of the control device or by means of a computer connected to an interface of the control device.

14. Method according to Claim 1, **characterized in that** the assignment information is created and/or the overlay functionality is activated by means of a program routine executed by a processor of the control device.

15. Method according to Claim 14, **characterized in that** the control device has at least two processor cores, wherein the program routine for creating the assignment information and/or activating the overlay functionality is executed by a first processor core and the original program routines are executed by a second processor core or a plurality of further processor cores.

16. Method according to Claim 1, **characterized in that** the bypass routine comprises at least one complete function ending with a return instruction.

17. Method according to Claim 1, **characterized in that** the bypass routine or a part of a bypass routine is stored in a memory area, which can be addressed by the processor, via an interface of the control device, in particular during the run time of the control device.

18. Method according to Claim 1, **characterized in that** at least one instruction in a program routine is overlaid by a jump instruction in the overlay memory, wherein the jump instruction refers to an address after which a program code is programmed, which program code reconstructs the overlaid instruction, still calls a functional bypass routine and ends with a jump instruction which refers to that instruction in the program routine which follows the overlaid instruction.

19. Method according to Claim 18, **characterized in that** the control device has at least two processor cores and at least the functional code of the bypass routine is executed by one or more first processor cores and the original program routines are executed by one or more second processor cores.

20. Method according to one of the preceding claims, **characterized in that** an overlay memory is formed on a control device by programming a memory management unit of the control device in such a manner that the logical memory addresses assigned to the program routine to be replaced or to the program routine part to be replaced when the overlay functionality is deactivated are assigned to physical memory addresses which all comprise at least one part of the bypass routine when the overlay functionality is activated.

## Revendications

1. Procédé de modification du logiciel dans la mémoire d'un appareil de commande électronique, la mémoire comprenant au moins une mémoire morte avec plusieurs sous-programmes originaux mémorisés dedans et formant au moins une partie du logiciel, qui sont traités par au moins un processeur de l' appareil de commande, la mémoire comportant au moins une mémoire de travail pour mémoriser des données volatiles et la mémoire comportant en plus une mémoire de recouvrement, chaque adresse de mémoire pouvant être attribuée de la mémoire de recouvrement dans la méoire morte au moyen d'une information d'affectation d'une adresse de mémoire de telle sorte que le processeur traite pour une fonctionnalité de recouvrement activée à la place d'un ordre de sous-programme à une adresse dans la mémoire morte l'ordre à une adresse attribuée de la mémoire de recouvrement, la fonctionnalité de recouvrement pouvant être activée et désactivée par le biais d'une interface de l'appareil de commande, pendant le temps de fonctionnement de l'appareil de commande, au moins une partie fonctionnelle d'un sous-programme de dérivation étant mémorisée dans une zone d'adresses dans la mémoire de recouvrement, par lequel sous-programme de dérivation un sous-programme original doit être au moins en partie remplacé ou un ordre de saut étant mémorisé dans la mémoire de recouvrement en tant que première partie d'un sous-programme de dérivation, qui renvoie directement ou indirectement à une deuxième partie du sous-programme de dérivation qui est mémorisée dans une zone d'adresses accessible au processeur et une information d'affectation étant établie, laquelle affecte l'adresse l'adresse et/ou la zone d'adresses de la mémoire de recouvrement à une adresse ou une zone d'adresses du sous-programme à remplacer ou de la partie à remplacer du sous-programme, **caractérisé en ce qu'**un code d'un sous-programme de dérivation sans arrêt de l'appareil de commande est échangé par le fait qu'une fonction de recouvrement activée est d'abord désactivée et l'appareil de commande continue de fonctionner en exécutant les sous-programmes originaux, au moment de la désactivation, le flux de programmes se trouvant en dehors du sous-programme de dérivation et pendant l'exécution des sous-programmes originaux, le code d'un sous-programme de dérivation étant manipulé dans la mémoire de recouvrement et la fonctionnalité de recouvrement étant à nouveau activée après la fin de la manipulation, lorsque le processeur traite le code de programme en dehors du sous-programme à remplacer.

2. Procédé selon la revendication 1, **caractérisé en ce que** toute la zone d'adresses dans la mémoire morte, laquelle est occupée par les sous-programmes à remplacer ou la partie de sous-programmes à remplacer, est recouverte par la mémoire de recouvrement avec une zone d'adresses de même longueur dans laquelle le sous-programme de dérivation remplaçant est au moins partiellement mémorisé.

3. Procédé selon la revendication 1, **caractérisé en ce que** pour un sous-programme de dérivation avec une longueur de code de programme plus longue que le sous-programme à remplacer ou que la partie de sous-programme à remplacer, toute la zone d'adresses dans la mémoire morte, laquelle est occupée par le sous-programme à remplacer ou la partie de sous-programme à remplacer, est recouverte dans la mémoire de recouvrement par une zone d'adresses de même longueur, dans laquelle est mémorisée une première partie du sous-programme de dérivation, lequel se termine par un ordre de saut, lequel ordonne au processeur de poursuivre le traitement de programme sur une adresse identifiée par l'ordre de saut à partir de laquelle au moins une autre partie du sous-programme de dérivation est mémorisée.

4. Procédé selon la revendication 2 ou 3, **caractérisé en ce que** lors d'un remplacement de l'ensemble d'un sous-programme, le sous-programme de dérivation se termine par un ordre de retour, lequel ordonne au processeur de revenir avec le traitement de programme au sous-programme que le sous-programme à remplacer a appelé, notamment a appelé en tant que procédure de sous-programme ou lors d'un remplacement uniquement d'une partie d'un sous-programme, le sous-programme de dérivation se termine par un ordre de saut qui ordonne au processeur de poursuivre le traitement de programme avec l'ordre du sous-programme original qui suit la partie à remplacer.

5. Procédé selon la revendication 1, **caractérisé en ce que** l'ensemble du code fonctionnel d'un sous-programme de dérivation est mémorisé dans une zone de mémoire en dehors de la mémoire de recouvrement active et un ordre ou une donnée est recouvert à une adresse du sous-programme à remplacer au moyen de la mémoire de recouvrement avec un ordre de saut qui ordonne au processeur de poursuivre le traitement sur l'adresse qui est identifiée par l'ordre de saut et est mémorisée à partir du code fonctionnel du sous-programme de dérivation, lequel se termine par un ordre de retour, lequel ordonne au processeur de revenir au sous-programme qu'a appelé le sous-programme à remplacer, notamment appelé en tant que procédure de sous-programme.

6. Procédé selon la revendication 1, **caractérisé en ce que** le code fonctionnel du sous-programme de dérivation est mémorisé dans une zone de mémoire en dehors de la mémoire de recouvrement active et un ordre à une adresse du sous-programme à remplacer est recouvert dans la mémoire de recouvrement avec un ordre de saut qui ordonne au processeur de poursuivre le traitement sur une adresse qui est identifiée par l'ordre de saut, l'ordre de saut renvoyant à une adresse à partir de laquelle un code de programme procède en plus à l'appel du code fonctionnel du sous-programme de dérivation, notamment l'appel du code fonctionnel du sous-programme de dérivation ayant lieu à l'intérieur d'une procédure de sous-programme appelée à l'intérieur de ce code de programme.

7. Procédé selon la revendication 1, **caractérisé en ce que** par une logique procédant à l'activation, notamment qui se déroule sur l'appareil d'intervention raccordé par l'interface, la position de traitement du programme du processeur de l'appareil de commande est surveillée, par ex. à l'aide du compteur de programme et l'activation a lieu à un moment auquel la position de traitement du programme indique une adresse en dehors du sous-programme à remplacer.

8. Procédé selon la revendication 1, **caractérisé en ce que** par une logique procédant à l'activation, notamment qui se déroule sur l'appareil d'intervention raccordé par l'interface, un déclencheur/interrupteur est surveillé, qui est fixé par le code de programme, lequel est disposé en dehors du sous-programme à remplacer et l'activation a lieu lorsqu'une modification du déclencheur/de l'interrupteur est déterminée.

9. Procédé selon la revendication 8, **caractérisé en ce que** le déclencheur est constitué par un accès de variable ou une modification d'état d'une broche E/S.

10. Procédé selon la revendication 1, **caractérisé en ce que** l'activation est exécutée par une procédure de sous-programme appelée par un processeur de l'appareil de commande.

11. Procédé selon la revendication 1, **caractérisé en ce qu'**un ordre dans un sous-programme en dehors du sous-programme à remplacer est recouvert par un ordre de saut dans la mémoire de recouvrement, l'ordre de saut renvoyant à une adresse à partir de laquelle un code de programme est programmé, lequel reconstruit l'ordre recouvert, lequel procède en plus à l'activation ou à la désactivation de la fonctionnalité de recouvrement pour le sous-programme à remplacer et lequel se termine par un ordre de saut, qui renvoit à l'ordre dans le sous-programme en dehors du sous-programme à remplacer, lequel a lieu sur l'ordre recouvert, notamment l'activation ayant lieu par appel d'une procédure de sous-programme à l'intérieur de ce code de programme.

12. Procédé selon la revendication 1, **caractérisé en ce que** dans le code mémorisé dans la mémoire de recouvrement active reconstruit exactement pour une partie le code mémorisé dans les adresses de mémoire respectivement attribuées de la mémoire morte.

13. Procédé selon la revendication 1, **caractérisé en ce que** l'établissement de l'information d'affectation et l'activation de la fonctionnalité de recouvrement ont lieu au moyen d'un appareil d'intervention raccordé à une interface de l'appareil de commande ou d'un ordinateur raccordé à une interface de l'appareil de commande.

14. Procédé selon la revendication 1, **caractérisé en ce que** l'établissement de l'information d'affectation et/ou l'activation de la fonctionnalité de recouvrement ont lieu au moyen d'un sous-programme exécuté par un processeur de l'appareil de commande.

15. Procédé selon la revendication 14, **caractérisé en ce que** l'appareil de commande comporte au moins deux coeurs de processeur, le sous-programme étant traité par un premier coeur de processeur pour établir l'information d'affectation et/ou activer la fonctionnalité de recouvrement et les sous-programmes originaux sont traités par un deuxième coeur de processeur ou par plusieurs autres coeurs de processeur.

16. Procédé selon la revendication 1, **caractérisé en ce que** le sous-programme de dérivation contient au moins une fonction complète se terminant par un ordre de retour.

17. Procédé selon la revendication 1, **caractérisé en ce que** le sous-programme de dérivation ou une partie d'un sous-programme de dérivation, est mémorisé par le biais d'une interface de l'appareil de commande, notamment pendant le temps de fonctionnement de l'appareil de commande, dans une zone de mémoire adressable par le processeur.

18. Procédé selon la revendication 1, **caractérisé en ce qu'**au moins un ordre dans un sous-programme est recouvert par un ordre de saut dans la mémoire de recouvrement, l'ordre de saut renvoyant à une adresse à partir de laquelle un code de programme est programmé, lequel reconstruit l'ordre recouvert, lequel appelle en plus un sous-programme de dérivation fonctionnel et lequel se termine par un ordre de saut qui renvoit à l'ordre dans le sous-programme qui suit l'ordre recouvert.

19. Procédé selon la revendication 18, **caractérisé en ce que** l'appareil de commande comporte au moins deux coeurs de processeur et au moins le code fonctionnel du sous-programme de dérivation est traité par un ou plusieurs premiers coeurs de processeur et les sous-programmes originaux sont traités par un ou plusieurs deuxièmes coeurs de processeur.

20. Procédé selon l'une quelconque des revendications précédentes, **caractérisé en ce qu'**une mémoire de recouvrement est formée sur un appareil de commande par programmation d'une unité de gestion de mémoire de l'appareil de commande de telle sorte que les adresses de mémoire logiques pour une fonctionnalité de recouvrement désactivée du sous-programme à remplacer ou attribuées à la partie de sous-programme à remplacer sont attribuées pour une fonctionnalité de recouvrement activée à des adresses de mémoire physiques, qui contiennent dans leur ensemble au moins une partie du sous-programme de dérivation.
